# EUROPEAN PATENT SPECIFICATION

(11) **EP 3 120 497 B1**
(45) Date of publication and mention of the grant of the patent: **11.12.2019**
(21) Application number: 15764446.9
(22) Date of filing: 20.03.2015
(51) Int. Cl.: H04L 12/24, H04L 29/08, H04L 12/725

(54) **SYSTEMS AND METHODS FOR ROUTING MESSAGES IN DISTRIBUTED COMPUTING ENVIRONMENTS**
SYSTEME UND VERFAHREN ZUM ROUTEN VON NACHRICHTEN IN VERTEILTEN RECHNERUMGEBUNGEN
SYSTÈMES ET PROCÉDÉS D'ACHEMINEMENT DE MESSAGES DANS DES ENVIRONNEMENTS INFORMATIQUES DISTRIBUÉS

(30) Priority: 21.03.2014 US 201414222123; 21.03.2014 US 201414222118; 21.03.2014 US 201414222106
(43) Date of publication of application: 25.01.2017
(73) Proprietor: PTC Inc., Boston, MA 02210 (US)
(72) Inventor: MAHONEY, Mike, Needham, Massachusetts 02494 (US); DEREMER, Bob, Needham, Massachusetts 02494 (US); BULLOTTA, Rick, Phoenixville, Pennsylvania 19460 (US)
(74) Representative: Müller-Boré & Partner Patentanwälte PartG mbB
(86) International application number: PCT/US2015/021882
(87) International publication number: WO 2015/143405

(56) References cited:
- US-A1- 2003 005 163
- US-A1- 2006 031 520
- US-A1- 2007 104 180
- US-A1- 2012 054 851
- US-A1- 2012 158 825
- US-A1- 2014 016 455

## Description

### FIELD OF THE INVENTION

The present invention generally relates to operations in a distributed computing environment. More particularly, in certain embodiments, the invention relates to message routing using name-based identifiers in distributed computing environments. In other embodiments, the invention relates to injecting routing and authentication state information into messages being routing in distributed computing environments. In yet other embodiments, the invention relates to using intermediate (e.g., connection) servers to manage persistent connectivity between end-point devices and platform servers in a distributed computing environment.

### BACKGROUND

The Internet of Things ("IOT") refers to the network of systems, devices, and/or physical objects (collectively referred to as "systems") existing in the real world, ranging from automobiles to heart monitors. These physical objects and/or devices are equipped and/or embedded with software, sensors, electronics, communication means and the like, that enable them to, among other things, communicate and exchange data. The number of systems that make up the Internet of Things is rapidly growing. Some industry analysts have estimated that the number of connected systems (in an industrial, consumer, government, medical, and business setting) may rise from five billion to one trillion over the next ten years.

In one type of distributed computing architecture, one or more servers, such as business logic servers (referred to as "platform servers"), are employed to service data and information for hundreds of thousands or more computing devices, for example, within the Internet of Things. These servers may be designated and/or assigned, for example, based on a given geographic region. For example, a platform server may service a group of devices in North America or the East Coast of the United States. The number of devices needed to connect to these servers typically exceeds the resource capacity of such servers.

To this end, intermediate servers may be employed to manage certain functions on behalf of or for their respective platform servers, including tracking routing state information between the computing devices and the platform servers, as well as tracking authentication session information for a given connected device. Such load-balancing functions thus reduce the processing and storage burdens of a single computing resource by allocating those burdens among a broader set of computing resources. Intermediate servers can be configured to be stateless (e.g., they do not maintain information associated with the tracking of the message) to reduce the processing and storage burdens of the servers.

Moreover, persistent connectivity can be used in conjunction with intermediate servers to reduce the number of connections and/or communications needed to be processed by the platform server, thereby lowering the central processing unit (CPU) and memory usage of these systems (and/or allowing for more devices to be connected). This, in turn, reduces the cost of such connectivity and is particularly beneficial when there are such a vast number of connected devices. Persistent connectivity generally refers to a single connection (e.g., persistent connection) between systems (e.g., devices, servers), which once established is used to send and receive multiple requests/responses between the systems, for example, on a one-to-one basis.

US 2012/054851 (Piazza) describes a single proxy server that consolidates multiple TCP requests from clients into one TCP connection between a proxy and server. A unique identifier is registered for the client, and the server is signaled over the persistent comlection to register the unique identifier. A client connection is established between the client and proxy responsive to the connection request. A content request is received from the client over the client connection. The unique identifier is prepended to the content request, the prepended content request is forwarded to the server, and prepended content is received from the server. The identifier and the content are extracted from the prepended content, and a client and a client connection corresponding to the extracted identifier are identified. The extracted content is returned to the corresponding client. However, in combining the intermediate servers with persistent connectivity, the one-to-one session-connection between the platform server and the connected devices is broken. That is, because the intermediate servers are stateless, they do not maintain information associated with the tracking of messages. Consequently, when platform servers communicate with connected devices through intermediate servers using persistent connectivity, routing state information of the communicated message is lost.

There is a need, therefore, for systems and methods for managing information, such as session state and/or session information, in a distributed architecture in which servers and devices communicate messages over persistent connections through stateless intermediate servers. There is also a need for such systems and methods to reduce storage and processing burdens on computing resources, and be adaptable to the rapid change, redistribution and growth in the number of interconnected devices in the Internet of Things.

### SUMMARY

The invention is defined by a method according to claim 1, a system according to claim 14 and a non-transitory computer readable medium according to claim 15. Further embodiments are defined by the dependent claims.

In general overview, the embodiments described herein provide a software library and computing architecture for building a federation of distributed computing systems to service data for a vast number of computing devices (e.g., connected devices). To achieve connectivity to a large number of connected devices, the federation generally includes multiple server nodes to share the workload. The server nodes can be logical/virtual or physical.

In some implementations, a platform server communicates with a given computing device across one or more intermediate servers over persistent connections. The platform routes (e.g., transmits) data to and from data storage servers and various back-end servers that provide services to the computing devices. To this end, the intermediate servers multiplex messages sent over persistent connections established with the edge servers and over persistent connections established with the platform server. It is observed that this federation of distributed computing systems can service over a 100,000 connected devices via a single platform server.

To maintain these persistent connections formed among the devices within the federation while beneficially allowing a given computing device to freely move within the system, the edge and intermediate servers operate using one or more non-network addressable identifiers associated with a given computing device. Such non-network addressable identifiers may be name identifiers associated with a given computing system. This feature allows the computing device to be serviced by the federation while being connected to any edge server within the federation. Indeed, the computing device does not need to have any knowledge of its own location within a network or federation, or any networking or routing details about nodes within the federation. The computing devices merely register, by providing their name and/or corresponding security key, to a given edge server. In turn, the device is bound to a path within the federation.

In some implementations, to share and/or off-load certain functions from the platform server, the intermediate servers maintain and enforce authentication session information for a given computing device within the federation, thereby saving the platform server from having to perform such a task. The intermediate servers maintain the authentication session for a given computing device once the credentials of the computing device are verified. Indeed, each intermediate server stores the authentication session information and injects it into the message of a given device, thereby freeing the platform server from having to maintain authentication session information for that device. In doing so, the platform server distributes the management of the authentication session to the intermediate server while allowing the platform server to still perform the authentication. To this end, data and information may be pipelined (e.g., transmitted) to independently operating intermediate servers, which may share connectivity work load of the platform server.

In some implementations, the intermediate servers are stateless connection managers that do not maintain state information of messages that they send or receive. To maintain state information associated with the tracking of messages with the stateless intermediate servers, the intermediate servers send and/or inject state information associated with the routing source of the messages into the messages themselves. Consequently, these inbound messages are injected with such routing state information to allow for the return of such messages. In particular, the routing state information is associated with a communication handle of the persistent connection over which the message is sent.

Applications for the systems and methods described herein are not limited to the aforementioned examples, but may be deployed in any number of contexts, as would be understood by one of ordinary skill in the art. Contents of the background are not to be considered as an admission of the contents as prior art.

The present disclosure describes a method of routing messages in a distributed computing environment between a platform server and an end-point device. The method includes providing a platform server and a plurality of intermediate servers. Each of the intermediate servers connects and maintains a persistent connection to the platform server and the intermediate servers may communicate and maintain a number of persistent connections with a number of edge servers. The intermediate server does not maintain state information associated with tracking and/or routing of the message.

The method includes receiving, via a port at a given intermediate server, a service request from a given edge server of the edge servers over a first persistent connection.

The method includes inserting (e.g., injecting), by the processor at the intermediate server, a given state identifier to the service request where the given state identifier (e.g., an endpoint identifier) is associated with a connection identity (e.g., a communication handle) of the first persistent connection over which the service request was received. In some implementations, the association is also stored in memory at the intermediate server. The method also includes transmitting, at the intermediate server, the service request to the platform server over a second persistent connection, where the service request includes the given state identifier. The method includes receiving, at the intermediate server, a response message over the second persistent connection, the response message having been generated by the platform server in response to the service request. The response message includes the given state identifier. The method also includes retrieving, at the intermediate server, the connection identity of the first persistent connection using the given state identifier. The given state identifier is the same state identifier transmitted within the service request.

The method may include routing, at the intermediate server, the response message to a selected connection of the persistent connections with the edge servers. The selected connection is based on the retrieved connection identity.

The persistent connections include Web-Socket connections. In some implementations, the given state identifier is inserted into a header portion of the service request.

In some implementations, the intermediate server maintains, in the memory, a second state identifier associated with an authentication exchange having been conducted between the computing device connected to the given edge server and the platform server. The second state identifier may be associated with a name value associated with that of the computing device. In such implementations, the method includes comparing, using the processor at the intermediate server, a device identifier located within the service request to the name value. If there is a match, the intermediate server may inject the second state identifier into the service request where the device identifier is associated with an identity of a given computing device operatively communicating with the given edge server. If the comparison does not result in a match, the intermediate server may send an unbind request to the given edge server. The unbind request causes the device identifier to be removed from a binding list of one or more device identifiers stored at the edge server. The second state identifier may be associated with the connection identity of the first persistent connection. The association is stored in memory at the intermediate server.

In another aspect, the present disclosure describes a system, namely an intermediate server, including a processor and a memory, the memory storing instruction that, when executed by the processor, cause the processor to receive, via a port, a service request from a given edge server over a first persistent connection. The instructions, when executed, further cause the processor to insert a given state identifier to the service request. The given state identifier is associated with a connection identity of the first persistent connection over which the service request was received. The instructions, when executed, further cause the processor to transmit the service request to the platform server over a second persistent connection, wherein the service request includes the given state identifier. The instructions, when executed, further cause the processor to receive a response message over the second persistent connection, the response message having been generated by the platform server in response to the service request where the response message includes the given state identifier. The instructions, when executed, further cause the processor to retrieve, at the intermediate server, the connection identity of the first persistent connection using the given state identifier where the given state identifier is the same state identifier transmitted within the service request. The instructions, when executed, may further cause the processor to route the response message to a selected connection of the persistent connections with the edge servers where the selected connection is based on the retrieved connection identity.

In some implementations, the given state identifier is inserted into a header portion of the service request. The persistent connections are Web-Socket connections. The association to a connection identity of the first persistent connection is stored in memory at the intermediate server.

In some implementations, the intermediate server maintains, in the memory, a second state identifier associated with an authentication exchange having been conducted between the computing device connected to the given edge server and the platform server. The second state identifier may be associated with a name value associated with that of the computing device. In such implementations, the intermediate server compares, by the processor, a device identifier located within the service request to the name value. If there is a match, the intermediate server may inject the second state identifier into the service request. The device identifier is associated with an identity of a given computing device operatively communicating with the given edge server. If the comparison is not a match, the intermediate server may send an unbind request to the given edge server. The unbind request causes the device identifier to be removed from a binding list of one or more device identifiers stored at the edge server. The second state identifier may be associated with the connection identity of the first persistent connection. The association is stored in memory at the intermediate server.

In another aspect, the present disclosure describes a non-transitory computer readable medium having instructions stored thereon, where the instructions, when executed by a processor, cause the processor to receive, via a port, a service request (possibly from a given edge server) over a first persistent connection. The instructions, when executed, further cause the processor to insert a given state identifier to the service request. The given state identifier is associated with a connection identity of the first persistent connection over which the service request was received. The instructions, when executed, further cause the processor to transmit the service request to the platform server over a second persistent connection. The instructions, when executed, further cause the processor to receive a response message over the second persistent connection, the response message having been generated by the platform server in response to the service request. The response message includes the given state identifier. The instructions, when executed, further cause the processor to retrieve, at the intermediate server, the connection identity of the first persistent connection using the given state identifier. The given state identifier is the same state identifier transmitted within the service request. The instructions, when executed, further cause the processor to route the response message to a selected connection of the persistent connections (possibly with the edge servers) where the selected connection is based on the retrieved connection identity.

The persistent connections include Web-Socket connections. In some implementations, the given state identifier is inserted into a header portion of the service request.

In some implementations, the intermediate server maintains, in the memory, a second state identifier associated with an authentication exchange having been conducted between the computing device connected to the given edge server and the platform server. The second state identifier may be associated with a name value associated with that of the computing device. In such implementation, the intermediate server may compare, by the processor, a device identifier located within the service request to the name value. If there is a match, the intermediate server may inject the second state identifier into the service request. The device identifier is associated with an identity of a given computing device operatively communicating with the given edge server. If the comparison is not a match, the intermediate server may send an unbind request to the given edge server. The unbind request causes the device identifier to be removed from a binding list of one or more device identifiers stored at the edge server. The second state identifier may be associated with the connection identity of the first persistent connection. The association is stored in memory at the intermediate server.

In some implementations, a method for injecting states into data streams is provided. An intermediate server is communicatively coupled to a network and to a platform server. The network includes the platform server connected thereto. The platform server is communicatively coupled to a plurality of intermediate servers over corresponding persistent connections. The plurality of intermediate servers are communicatively coupled to a plurality of computing devices over corresponding persistent connections. A service request is received, via a port, over a first persistent connection, from one of the plurality of computing devices. A state identifier is inserted into the service request, the state identifier being associated with a connection identity of the first persistent connection. The service request is transmitted to the platform server over a second persistent connection. A response message is received over the second persistent connection. The response message is generated by the platform server in response to the service request. The response message includes a state identifier of the response message. The connection identity of the first persistent connection is retrieved using the state identifier. The state identifier of the response message is the same state identifier included in the service request. The response message is transmitted, over the first persistent connection, to the one of the plurality of computing devices. The first persistent connection is selected based on the retrieved connection identity.

In some implementations, a second state identifier associated with an authentication exchange between the one of the plurality of computing devices and the platform server, the second state identifier being associated with a name value of the one of the plurality of computing devices. A device identifier included in the service request is compared to name values of the plurality of computing devices, the device identifier being associated with the one of the plurality of computing devices. The second state identifier is injected into the service request, if the device identifier included in the service request is matched with a name value of the plurality of computing devices.

In some implementations, in the event that the device identifier included in the service request is not matched with a name value of the plurality of computing devices, an intermediate server causes to remove the device identifier from a binding list (e.g., a binding list of an intermediate server, a binding list of an edge server) including one or more device identifiers.

The second state identifier is associate with the connection identity of the first persistent connection; and the association of the second state identifier with the connection identity of the first persistent connection is stored in a memory.

In some implementations, state information is associated with message content embedded within the response message, such that an intermediate server is stateless.

In some implementations, the state identifier is inserted into a header portion of the service request.

The first persistent connection and the second persistent connection are WebSocket connections.

In some implementations, a system is provided comprising a processor and a memory, the memory storing instructions that, when executed by the processor, cause the processor to communicatively couple (e.g., a platform server) to a network and to a platform server, the network including the platform server connected thereto. The platform server is communicatively coupled with a plurality of intermediate servers over corresponding persistent connections. The plurality of intermediate servers are communicatively coupled with plurality of computing devices over corresponding persistent connections. A service request is received, via a port, over a first persistent connection, from one of the plurality of computing devices. A state identifier is inserted into the service request, the state identifier being associated with a connection identity of the first persistent connection. The service request is transmitted to the platform server over a second persistent connection. A response message is received over the second persistent connection. The response message is generated by the platform server in response to the service request, and the response message includes a state identifier of the response message. The connection identity of the first persistent connection is retrieved using the state identifier, the state identifier of the response message being the same state identifier included in the service request. The response message is transmitted over the first persistent connection to the one of the plurality of computing devices, the first persistent connection being selected based on the retrieved connection identity.

In some implementations, a second state identifier associated with an authentication exchange between the one of the plurality of computing devices and the platform server is stored in the memory. The second state identifier being associated with a name value of the one of the plurality of computing devices. A device identifier included in the service request is compared to name values of the plurality of computing devices, the device identifier being associated with the one of the plurality of computing devices. The second state identifier is injected into the service request, if the device identifier included in the service request is matched with a name value of the plurality of computing devices.

In some implementations, in the event that the device identifier included in the service request is not matched with a name value of the plurality of computing devices, cause to remove the device identifier from a binding list (e.g., binding list of an intermediate server, binding list of an edge server) including one or more device identifiers.

In some implementations, the memory stores instructions that, when executed by the processor, cause the processor to: associate the second state identifier with the connection identity of the first persistent connection; and store, in the memory, the association of the second state identifier with the connection identity of the first persistent connection.

In some implementations, state information is associated with message content embedded within the response message, such that an intermediate server is stateless.

In some implementations, the state identifier is inserted into a header portion of the service request.

The first persistent connection and the second persistent connection are WebSocket connections.

In some implementations, a non-transitory computer readable medium has instructions stored thereon, wherein the instructions, when executed by a processor, cause the processor to: communicatively couple (e.g., an intermediate server) to a network and to a platform server, the network including the platform server connected thereto. The platform server is communicatively coupled with a plurality of intermediate servers over corresponding persistent connections. The plurality of intermediate servers are communicatively coupled with plurality of computing devices over corresponding persistent connections. A service request from one of the plurality of computing devices is received, via port, over a first persistent connection. A state identifier is inserted to the service request, the state identifier being associated with a connection identity of the first persistent connection. The service request is transmitted, to the platform server over a second persistent connection. A response message is received over the second persistent connection. The response message is generated by the platform server in response to the service request. The response message includes a state identifier of the response message. The connection identity of the first persistent connection is retrieved using the state identifier, the state identifier of the response message being the same state identifier included in the service request. The response message is transmitted to the one of the plurality of computing devices, the first persistent connection being selected based on the retrieved connection identity.

In some implementations, the instructions, when executed by a processor, cause the processor to: store, in the memory, a second state identifier associated with an authentication exchange between the one of the plurality of computing devices and the platform server, the second state identifier being associated with a name value of the one of the plurality of computing devices; compare a device identifier included in the service request to name values of the plurality of computing devices, the device identifier being associated with the one of the plurality of computing devices; and inject the second state identifier into the service request, if the device identifier included in the service request is matched with a name value of the plurality of computing devices.

In some implementations, the instructions, when executed by a processor, cause the processor to: in the event that the device identifier included in the service request is not matched with a name value of the plurality of computing devices, cause to remove (e.g., by the intermediate server) the device identifier from a binding list (e.g., binding list of an intermediate server, binding list of an edge server) including one or more device identifiers.

In some implementations, the instructions, when executed by a processor, cause the processor to: associate the second state identifier with the connection identity of the first persistent connection; and store, in the memory, the association of the second state identifier with the connection identity.

In some implementations, state information is associated with message content embedded within the response message, such that an intermediate server is stateless.

In some implementations, the state identifier is inserted into a header portion of the service request.

The first persistent connection and the second persistent connection are WebSocket connections.

### BRIEF DESCRIPTION OF THE DRAWINGS

The foregoing and other objects, aspects, features, and advantages of the present disclosure will become more apparent and better understood by referring to the following description taken in conjunction with the accompanying drawings, in which:
FIG. 1 is a block diagram of an example system for enabling communications between a platform server and a plurality of computing devices in accordance with an exemplary embodiment of the invention.
FIG. 2 is a block diagram of example persistent communication channels established between a given platform server and a given computing device in accordance with an embodiment of the invention.
FIG. 3 is an example of a messaging structure of an application protocol interface (API) communication in accordance with an embodiment of the invention.
FIG. 4 illustrates example messaging codes employed by the communication API protocol in accordance with an embodiment of the invention.
FIG. 5 is a swim-lane diagram of an example method of injecting state and routing information into a communication exchange between a platform server and an end-point device over a stateless persistent connection in accordance with an embodiment of the invention.
FIG. 6 is a swim-lane diagram of the method of injecting state and routing information into a data-request communication-exchange between a platform server and an end-point device over a stateless persistent connection in accordance with an embodiment of the invention.
FIG. 7 is a flow chart for an example method of controlling a connection server in accordance with an embodiment of the invention.
FIG. 8 illustrates a method of rebinding a persistent connection path for a computing device in accordance with an embodiment of the invention
FIG. 9 is a block diagram of an example system in accordance with an embodiment of the invention.
FIG. 10 is a flowchart of an example method of injecting state and routing information into a communication exchange between a platform server and an end-point device over a stateless persistent connection in accordance with an embodiment of the invention.
FIG. 11 is a flowchart of an example method of communication between two network nodes and an intermediary node over a persistent connection in accordance with an embodiment of the invention.
FIG. 12 is a flow chart of an example method of communication between the platform server and a plurality of an end-point device in accordance with an embodiment of the invention.
FIG. 13 is a block diagram of a computing device and a mobile computing device.

The features and advantages of the present disclosure will become more apparent from the detailed description set forth below when taken in conjunction with the drawings, in which like reference characters identify corresponding elements throughout. In the drawings, like reference numbers generally indicate identical, functionally similar, and/or structurally similar elements.

### DETAILED DESCRIPTION

It should be understood that systems, devices, methods, and processes of the claimed invention encompass variations and adaptations developed using information from the embodiments described herein. Adaptation and/or modification of the systems, devices, methods, and processes described herein may be performed by those of ordinary skill in the relevant art.

Throughout the description, where articles, devices, and systems are described as having, including, or comprising specific components, or where processes and methods are described as having, including, or comprising specific steps, it should be understood that, additionally, there are articles, devices, and systems of the present invention that consist essentially of, or consist of, the recited components, and that there are processes and methods according to the present invention that consist essentially of, or consist of, the recited processing steps.

It should be understood that the order of steps or order for performing actions is immaterial so long as the invention remains operable. Moreover, two or more steps or actions may be conducted simultaneously.

The mention herein of any publication or patent application, for example, in the Background section, is not an admission that such publication or patent application constitutes prior art with respect to any of the claims or subject matter presented herein. The Background section is presented for purposes of clarity and is not intended to be a description of prior art with respect to any claim.

Methods and systems are described herein that enable communications between a vast number of connected devices and a federation of servers in a distributed computing environment.

The federation of servers allow a given connected devices to freely move (e.g., become connected with, to, or through different networks and/or servers) within the distributed computing environment. As a result, the connected devices do not need to maintain information regarding the device's own location or any networking or routing details about nodes within the federation. Rather, edge and intermediate servers of the federation of servers use one or more non-network addressable identifiers associated with the connected devices to establish a binding path through the federation of servers, through which messages from a platform server may be sent to the connected devices. The federation of servers is beneficially configured to transmit messages from the edge of the federation (e.g., at edge servers) to the platform server via an inbound path. Thus, binding is only necessary to facilitate outbound messages from the platform server to the connected device. In some implementations, the edge and intermediate servers of the federation of servers allow binding of the device once the device has been authenticated within the federated system.

In another aspect, the intermediate servers are beneficially optimized to handle connections to a vast number of edge servers. The intermediate servers operate as stateless servers, in that they do not maintain or track the states of messages and/or communications that relay therethrough. Rather, the intermediate servers inject the state information into each inbound message and employ routing rules in directing the injected information back to its source. The injected state information may correspond to a communication handle of an outbound WebSocket connection associated with a return outbound path for the inbound message.

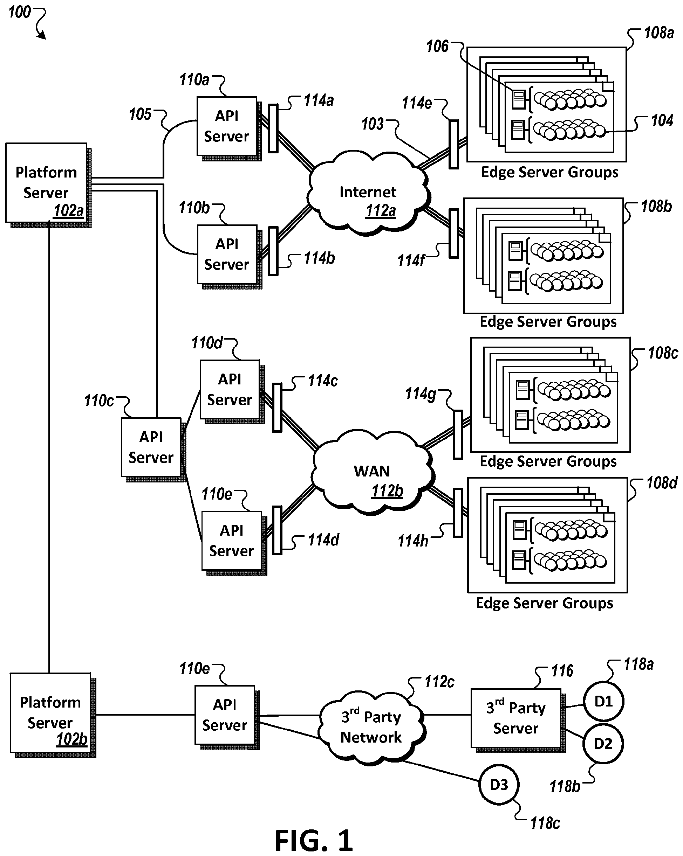

FIG. 1 is a block diagram of an example system 100 for enabling communications between a platform server 102 (shown as either "platform server" 102a or 102b) and a plurality of computing devices 104 in accordance with an embodiment of the invention. Each of the computing devices 104 may connect to an edge server 106 that services and provides communications with a group of computing devices 108 (shown as 108a, 108b, 108c, and 108d). In some example implementations, the computing devices 108 may communicate with a connection or application protocol interface (API) server 110 (described in further detail below). The communication of the computing devices 104 to the connection server may be performed via an edge server 106 and/or gateway device. A computing device 104, in some examples, is an electronic device that can communicate properties-, services-, and events-data, and the like, relating to physical assets/devices, computer applications and systems, people, data objects, and platform services.

In some implementations, the computing device 104 is a sensor or a machinery at an industrial complex; a computer or an office equipment at a business or government office; a point-of-sale machine at a market place or a vending machine; a construction equipment or a vehicle; a power generation or distribution equipment; a power substation or transmission equipment; a building meter; a server; a networking or routing equipment; a smart appliance; an exercise machine; a medical device or a prosthesis device; a medical diagnostic device or a hospital equipment; a commercial vehicle or a transport container; a motor vehicle or an electric bicycle; a cellphone, a laptop, a tablet, an electronic reader; or a clothing electronic-tag.

An edge server, in some implementations, is an electronic device that includes communication ports to interface with other systems, such as the endpoint device (e.g., computer device 104) and/or other servers. The edge server may be, for example, but not limited to, a gateway device, a network server, a single board computer, a supervisory control and data acquisition system ("SCADA"), or a programmable logic controller ("PLC"). The edge server may communicate to (e.g., and/or with) the endpoint device by industrial, commercial, computing, and military physical connection standards. These standards may include, for example , but not limited to, Modbus, RS-232, RS-422, RS-485, Serial-ATA, SCSI, FireWire (IEEE 1394), Ethernet, Universal Serial Bus, SONET ("Synchronous Optical Networking"), MIL-STD-1553, I²C ("Inter-Integrated Circuit"), CAN-bus ("controller area network"), ARINC 739 ("Avionics Digital Video Bus"), BACnet, and LonWorks. The standards may also include health/medical communication standards, such as CEN ISO/IEEE 11073. These examples are merely for illustrative purposes. To this end, other standards may also be employed.

To service data and information for (e.g., to, from) sets of computing devices 104, the computing devices 104 and/or one or more edge servers 106 may communicate with an intermediate server 110 (also referred to as a connection server 110 or an API server 110, shown as 110a, 110b, 110c, and 110d), over a first persistent connection 103. A persistent connection, or persistent connectivity, refers to a single connection between systems (e.g., intermediate server 110, edge server 106), which once established is used to send and receive multiple requests/responses between the systems.

The connection server 110, in turn, communicates with the platform server 102 over a second persistent connection 105. In essence, the connection server 110 forms or identifies a persistent path between the platform server 102 and a computing device 104 and/or edge server 106, across the first persistent connection 103 and the second persistent connection 105. That is, in some implementations, a persistent path refers to one or more connections (e.g., persistent connections) through which two systems are interconnected. In some implementations, the connection server 110 employs the Unix-based (e.g., Amazon EC2 Linux) or Windows-based (e.g., Windows Servers) operating system, operating Apache Tomcat with Oracle Java Runtime Environment or Java Development Kit.

Collectively, the platform servers 102, the connection servers 110, the edge servers 106 and/or the computing devices 104 form a federation of distributed computing system. In some implementations, the platform servers 102 are business logic servers that maintain connectivity to a given computing device 104. In such instances, the platform server 102 may include, or communicate with various back-office servers that include business logic and/or rules for providing service functions, such as searching, storing, and managing data and information, for example, of the computing device 104. To this end, the platform server 102 may primarily serve to route data to and from various applications and systems (e.g., back-office servers) and the computing devices 104.

In some implementations, the platform server 102 manages the authentication process of the computing devices 104.

In some implementations, the platform server 102 routes data to and from the various back-office applications and systems. For example, when data is received from a specific computing device 104, the platform server 102 may route (e.g., transmit across paths in a network) the data to another database server (e.g., back-office applications and systems). In other embodiments, a third party application requests the data to be sent by the platform server.

Back-office systems, including servers, may include, for example, third party products (e.g., software, hardware) for CRM/ERP ("customer relationship management" and/or "enterprise resource planning"), data analytics, Big Data Store (e.g., Hadoop, Data Warehouses, and various distributed file systems), identity management, billing, provisioning, and providing Web service. Examples of such back-office systems may include SAP® Enterprise Resource Planning "ERP", Salesforce® Customer Relationship Management "CRM", Operations Support System "OSS", and Business Support Systems "BSS" Components.

Various data storage and applications may communicate with the platform server 102. In some implementations, this communication is performed using Web Services, Java Database Connectivity (JDBC), or native APIs.

In some implementations, the communication exchange between the connection servers 110 and the edge servers 106 and/or the computing devices 104 occurs across a network infrastructure 112, such as the Internet 112a, a Wide-area network 112b, or a third party network 112c. In turn, one or more connection servers 110 communicate with the platform server 102. The platform server 102, the connection servers 110, the edge servers 106 and/or the computing devices 104, collectively, form a distributed computing system. In some implementations, a connection server 110 communicates with a set of edge servers 106 and/or computing devices 104 through a set of network security equipment 114. The security equipment secures the connection server 110, platform server 102, edge servers 106, and computing devices 104 from the open network infrastructure 112. The network security equipment 114 may include, for example, a firewall or Network Address Translation (NAT) protocol.

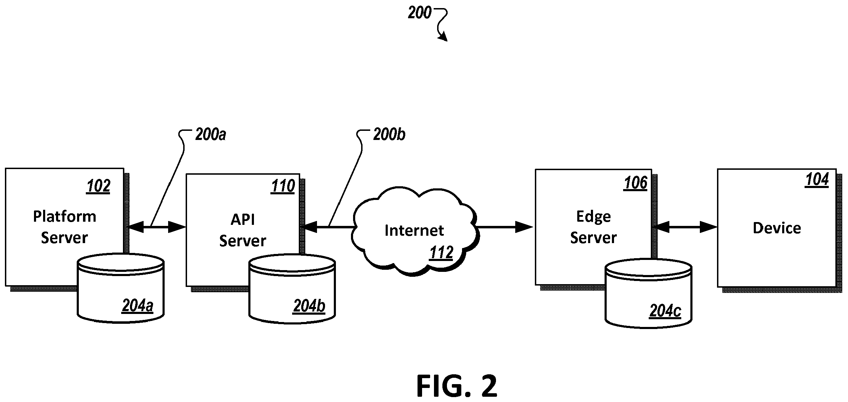

FIG. 2 is a block diagram of an example persistent communication channel 200 established between a given platform server 102 and a given computing device 104 in accordance with an embodiment of the invention.

The platform server 102 runs, in some implementations, a server-client application using an API protocol library 204 (shown as 204a). The API protocol library manages the communication over the channel 200. The edge server 106 and/or computing device 104 runs a server-client application that runs the same communication API protocol library 204 (shown as 204c). To this end, messages being communicated between the platform server 102 and the edge servers 106 and/or computing device 104 are, for the most part, symmetrical in that these messages share the same message structure and features.

In some implementations, the API protocol library 204 is a binary Dynamic REpresentational State Transfer (REST) API, or "RESTful" API.

This symmetry of the messages is intended to reduce the complexity of operation of the connection server 110, as the connection server 110 can generally service (e.g., process) each communicated message in the same manner without much regard to the source or target.

In some implementations, the communication API protocol is used to generate each message with metadata relating to the connection. The connection metadata may include a message identifier, authentication session information, and/or routing state information.

In some implementations, the connection server 110 uses the connection metadata, among other things, to preserve routing state information for messages transmitted between the edge server 106 (and/or computing device 104) and the platform server 102 (in particular, for inbound messages from the edge server 106 (and/or computing device 104) to the platform server 102). To this end, the routing state information for a given edge server 106 (and/or computing device 104) and a given platform server 102 is communicated within each message, rather than stored, thereby allowing the servers to be stateless. That is, the servers are stateless because they do not store routing state information, but rather communicate that information along with each message.

In addition, in some implementations, the connection server 110 uses the connection metadata to communicate authentication session information for a given connected device to the platform server. In some implementations, once a given connected device (e.g., computing device 104) has been authenticated (e.g., by the platform server 102), the authentication session information (e.g., session identification number) is stored at the connection server and is associated with the given connected device (e.g., via the device name). Indeed, when a message is a received from a given device (e.g., computing device 104), the connection server 110 compares the identifier of the given device (e.g., the device name embedded within the message) to a list of stored authenticated devices maintained by the connection server 110. Upon identifying a match of the device name in the stored list, the connection server 110 inserts the authentication session information (e.g., session identification number) into the message and forwards the updated message to the platform server 102. In some example implementations, the connection server 110 also inserts an endpoint identifier corresponding to the edge server 106 and/or computing device 104. Consequently, the platform server 102 does not need to maintain the authentication session information for a given device.

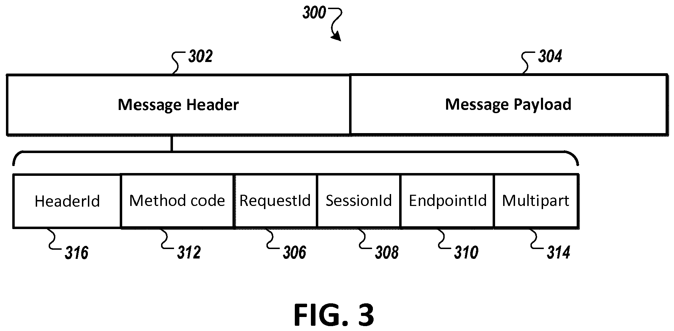

FIG. 3 is an example message structure 300 of the communication API protocol 204 in accordance with an embodiment of the invention. The message structure 300 may include a header 302 that provides the connection metadata and a message payload or body 304 that provides the message content (e.g., data to be serviced). The header 302 may include base transport data for inbound messages from the edge server 106 and/or computing devices 104 to the platform server 102.

In some implementations, the header 302 includes a session identification number 308, referred to as a "SessionId 308." The session identification number is a unique identifier used to identify a session for a given device that has undergone the authentication process and is thus authenticated by the system. The session identification number may be associated with an identifier (e.g., name) of an end-point device (e.g., computing device 104) from where a message is originated, a corresponding edge server 106 through which a message is received, and/or a connection (e.g., WebSocket connection) over which a message is received. That is, in some implementations, the session identification number is associated with a connection handle of a persistent connection associated with the end-point device (e.g., edge server, computing device).

The connection server 110 may use the session identification number to manage authentication session state on behalf of the platform server 102. In some embodiments, the association is used by the connection server 110 to determine a binding path with the computing device 104.

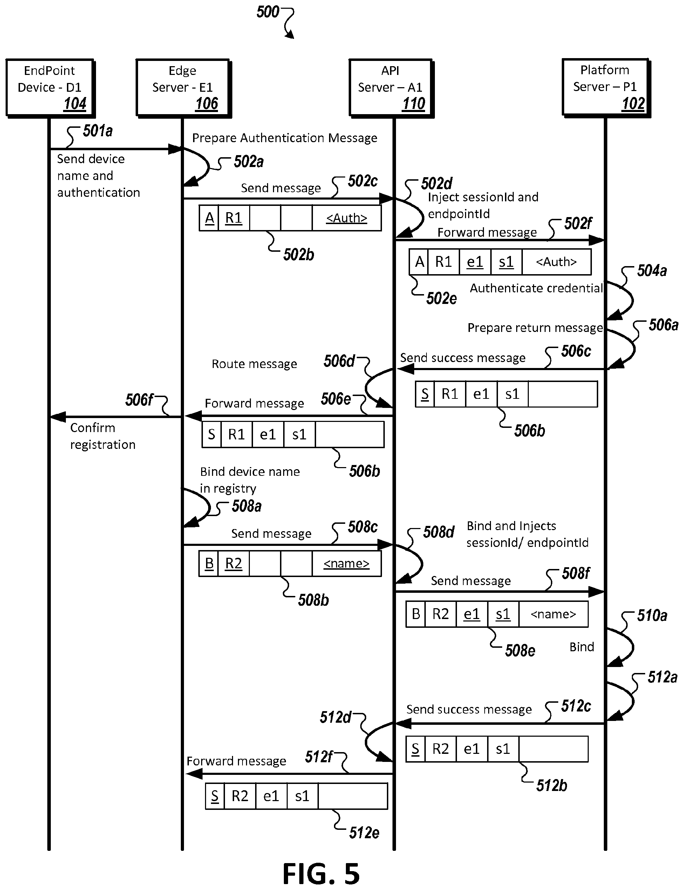

In some implementations, the connection server 110 generates the session identification number 308 during an authentication process of a given computing device 104. Device authentication refers to the process of one system (e.g., computing device 104) verifying to another system (e.g., platform server 102) that it is indeed the system that it claims to be. The authentication process may be achieved by a number of techniques, including those using passwords, certificates, smart cards, tokens, biometrics, proximity, and the like. One example implementation of an authentication process is described in more detail below with reference to FIG. 5.

During the authentication process, the connection server 204 generates and stores the session identification number 308 when an authentication message is received. In some implementations, the connection server 204 maintains a counter, or the like, associated with a session identification number. Upon receiving a request to authenticate an end-point device (e.g., edge server 106, computing device 104), the connection server 204 may use the latest value from the counter as the session identification number. The connection server 204 forwards the session identification number, in conjunction with the authentication message, to the platform server 102, where the authentication message is evaluated. Upon a success message being received from the platform server 102, the connection server 204 stores the session identification number 308 in a local table, memory, database, or the like. In some implementations, the connection server 204 maintains an association of the session identification number with one or more of an edge servers, a WebSocket connection and/or the name of any devices that are connected to the federation via the WebSocket connection . This preferably includes the end point devices and/or the edge servers. In some implementations, the session identification number 308 is preferably a 32-digit long binary number with the most-significant digit (MSB) first, though it can be of various data length and endian.

In some implementations, the header 302 may include an endpoint identification number 310, referred to as an "EndPointId 310", which is associated with a connection handle of a given persistent connection 200, over which a message from an edge server and/or computing device is received. The connection server can thereby readily retrieve the connection handle of the persistent connection 200 using the endpoint identification number 310. The endpoint identification number 310 is preferably a 32-digit long binary number with the most-significant digit (MSB) first. The connection server 110 may use the endpoint identification number to preserve routing state information that would otherwise be lost due to the multiplexing of the persistent connection through the stateless connection server.

The header 302 may include other information fields to further improve the operational efficiency of the messaging protocol. In some implementations, the header 302 includes a request identification number 306 (referred to as a "RequestId 306") that is associated with a given message (and used to identify that given message). The request identification number 306 may be randomly generated or incrementally generated to be unique for a messages transmitted over a given persistent connection or connection channel 200. The request identification number 306 may be employed to determine, for example, whether a message has been processed (e.g., a service request included in the message has been fulfilled). In some implementations, the request identification number 306 is preferably a 24-digit long binary number with the most-significant digit (MSB) first, though it can be of various data length and endian. In some implementations, 1-bit of the request identification number 306 is designated as the message source identifier, indicating the originating platform server 102, edge server 106 and/or computing device 104. This ensures that the request identification number 306 is unique.

In some implementations, the header 302 may include a message type field 312, referred to as a "Method code 312." The message type field 312 may include one or more codes to allow for the quick identification of the type of message being received (e.g., request, response, status, acknowledgement, etc.). For simpler messages, such as acknowledgement or error messages, the message type field 312 may constitute the message payload. That is, because the message code can correspond to an acknowledgment or error, which constitutes the entirety of the intended communication, those messages can omit other data within the message body 304. For request type messages, the message type field 312 may include a code corresponding to a type of request (e.g., get, put, post, delete, bind, authenticate, etc.). In some implementations, the request type message may be based on an Hypertext Transfer Protocol (HTTP) framework.

In some implementations, the header 302 may include a multi-part message field 314, referred to as "Multipart 314." This field may be used to identify whether the message is a part of a group of messages having the same request identification number 306.

In some implementations, the header 302 may include a header identification number 316, referred to as "HeaderId 316." This field is used to identify the version number of the header format. The header identification number 316 is preferably an 8-bit number.

In some implementations, the body 304 includes an "entity type" and "entity name" (e.g., corresponding to the source of the data or request), a "characteristic" field, a "target name" (e.g., corresponding to an intended recipient of the data or request), and a number of message count.

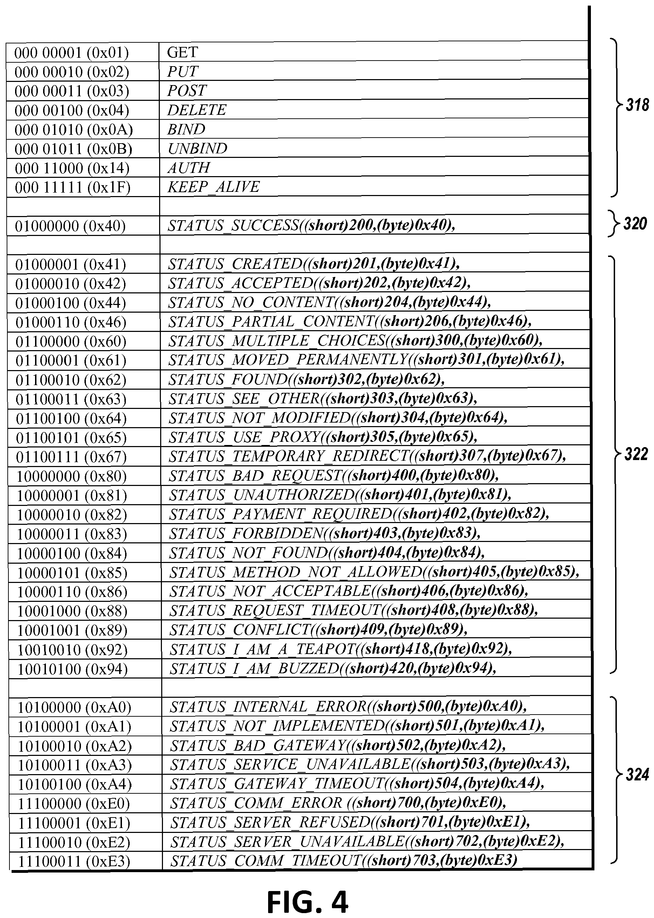

FIG. 4 illustrates example message codes employed by the communication API protocol in accordance with an embodiment of the invention. The codes include HTTP-based request messages 318, HTTP-based success codes 320, HTTP-based server-error codes 322, and HTTP-based client-error codes 324.

In an aspect of an embodiment of the invention, the connection server 110 injects routing state information into an inbound message being sent to the platform server 102. Injecting routing state information over a stateless connection improves performance of the connection over typical stateful connections by reducing the amount of information stored by a server (e.g., connection server 110). That is, by having the routing state information embedded within each message, the connection server can complete a roundtrip message transfer, in some implementations, using merely a lookup of the connection handle associated with the routing state information.

In another aspect of an embodiment of the invention, the connection server 110 injects (e.g., appends, replaces) the authentication session information into an inbound message being sent to the platform server 102. In having the authentication session information embedded within the message, the connection server 110 takes over, for the platform server 102, the managing and tracking of the authentication session for a given connected device (e.g., the computing device 104). This frees resources for the platform server 102 to perform other tasks, e.g., preferably to manage more devices.

FIG. 5 is a swim-lane diagram of an example method 500 of injecting authentication session and routing state information into a communication exchange between a platform server 102 and an end-point device 104 over a multiplexed stateless persistent connection in accordance with an embodiment of the invention. It should be understood that messages of various types (e.g., requests, responses) for different purposes (e.g., authentication, deleting, binding) may be processed using the systems and/or methods described herein.

The method 500, in some implementations, begins with a computing device 104 (referred to as endpoint device "D1") registering with an edge server 106 (referred to as edge server "E1") (step 501a). In some implementations, the registration may be a handshake, information exchange, or some automated process of negotiation to establish communication between the endpoint device "D1" and the edge server "E1." The edge server "E1" is an electronic device that includes communication ports to interface to the endpoint device D1.

The edge server "E1", which is executing a client-side application using the API protocol library 204, prepares (step 502a) an authentication request message 502b in accordance, for example, with the request message structure (shown as "A") described in relation to FIGS. 3 and 4. The request message 502b further includes a "RequestId R1" (shown as "R1") corresponding to the request identification number 306 described in relation to FIG. 3.

The edge server "E1" (106) sends (step 502c) the authentication request message 502b to the connection server 110 over a first persistent connection established between the edge server "E1" (106) and the connection server "A1" (110).

In some example implementations, the end-point device (e.g. computing device) 104 prepares the authentication request message and transmits it to the connection server "A1" (110), without first communication with or through an edge server.

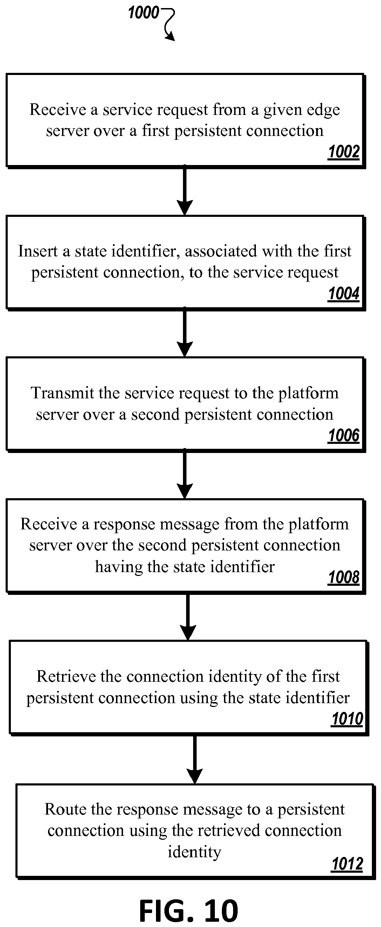

The body of the message (e.g., FIG. 3, message payload 304), in some implementations, includes an authentication message (shown as "<Auth>"). The authentication message may include a name (or name identifier) of the endpoint device "D1" (104) and a corresponding security code, along with any other information that is used in the applicable authentication technique. Alternatively, in some implementations, the authentication name may be the name identifier of the edge server "E1" (106). The name identifier may be random or descriptive. The name identifier may have some reference to the owner and/or type of device. For example, an electrocardiogram device number 123 owned by the John Doe Medical Institute may have a descriptive name identifier of "JohnDMedInt_EKG_Dev_123." As described in more detail below with reference to FIG. 10, the name or name identifier is a non-addressable identifier.

In some implementations, the authentication name and the corresponding security code are formatted in an UTF-8 data-type string ("Unicode Standard- 8 bits"). The string may be of any length and may be preceded, in the message, by a length value corresponding to the string length in the UTF-8 format. The corresponding security code may be, for example, a password, such as "GoodPassWord123." Of course, various values and lengths may be employed. In other implementations, the authentication message ("<AUTH>") is a security key, which can be an encrypted data string generated using a token associated with a name identifier of the edge server "E1." Various conventional authentication techniques may be employed.

In some implementations, the edge server "E1" (106) (and/or endpoint device "D1" (104)) uses a second set of authentication credentials in addition to the name and corresponding password used in the authentication request message. The second set of authentication credentials may be specific to the edge server "E1" (106) (and/or endpoint device "D1" (104)), to prevent non-authenticated computing devices from binding with it.

Still referring to FIG. 5, upon receiving the authentication request message 502b, in some implementations, the connection server "A1" (110) generates and injects (step 502d) "SessionId S1" (shown in FIG. 5 as "s1") and "EndpointId e1" (shown as "e1") into the received message 502b, to produce message 502e. The connection server "A1" (110) in turn sends (step 502f) the message 502e to the platform server 102, referred to as the platform server "P1" (102), over a second persistent connection established between the connection server "A1" (110) and the platform server "P1" (102). The "EndpointId e1" may correspond to the endpoint identification number 310, as described in relation to FIG. 3, that is associated with the connection handle of the first persistent connection. The "EndpointId e1" may be an identifier used to retrieve a connection handle (e.g., a WebSocket handle), or the like, for and/or associated with a communication channel from which the inbound message is received by the connection server "A1" (110). The "SessionId s1" may correspond to the session identification number, as also described in relation to FIG. 3, that is associated with a session number associated with the connection to edge server "E1" and/or the endpoint device "D1" (104). The SessionId s1 indicates an authenticated session state of the endpoint device and/or the edge server.

In some implementations, the received authentication message 502b has a NULL or EMPTY value in the header fields 308 and 310. To this end, the "SessionId s1" and the "EndpointId e1" can replace the values (e.g., NULL) therein. In other implementations, the received message 502b is concatenated with the "SessionId s1" and the "EndpointId e1." Of course, various methods of injecting (e.g., adding, appending, inserting, replacing) data into a data stream may be employed.

In turn, upon receiving the message 502e, the platform server "P1" (102) processes the authentication message (<"AUTH">) (step 504a). In some implementations, the platform server "P1" (102) authenticates the credentials of the endpoint device "D1" (104) using an authentication registry that it maintains (e.g., by performing a lookup). In other implementations, the platform server "P1" (102) may route the message to a back-office authentication-server (not shown) to perform the authentication. Table 1 below illustrates an exemplary authentication registry for authenticating devices using non-addressable name identifiers and security codes.

**TABLE 1**

| AUTHENTICATION REGISTRY | |
|---|---|
| DEVICE NAME | SECURITY CODE |
| Hospital_VendMach | pass 123 |
| John_Smith_Tablet_1 | pass000word |
| JohnDMedInt_EKG_Dev_123 | asdfjkl |
| Store_POSDev | Securecode |
| Edge Server 1 | Credential000 |

The platform server "P1" (102), in turn, prepares a return message 506b (step 506a). The return message 506b may be related to the authentication process (e.g., passed or not passed), or it may be an acknowledgement of receipt of the message (e.g., success receipt or receipt error). To this end, the return message 506b may be a status code, as described in relation to FIG. 4.

In some implementations, the platform server 102 prepares the return message 506b including the "RequestId R1", the "SessionId s1", and/or the "EndpointId e1," received in the request message 502e. In essence, the platform server "P1" (102) employs the metadata information of the received message to include in and route a return message, which may be an indicia of acknowledgement or success. The platform server "P1" (102) then sends the message 506b (step 506c) to the connection server 110 over the second persistent connection.

Upon receiving the message 506b, in some implementations, the connection server "A1" (110) stores the "SessionId S1" in association with the device name of the endpoint device "D1" 104 in a table, database, buffer, or the like, associated with an authenticated session. The connection server 110 employs such table, database, buffer, or the like, to confirm that an inbound message belongs to and/or is associated with an authenticated endpoint, and can thus be relayed to the platform server 102. The connection server "A1" (11) may maintain a session identification number "SessionID S1" for each downstream connection (e.g., WebSocket connection), such as connections to endpoint devices and/or to edge servers (e.g., acting as gateways). In some implementations, the connection server maintains a session identification number for the upstream connections (e.g. WebSocket connections), for example, to the platform server.

In addition, upon receiving the message 506b, in some implementations, the connection server "A1" (110) uses the "EndPointId e1" to identify the connection over which to forward the message 506b (step 506d) to the Edge Server "E1" (106). To this end, no additional processing is necessary to be performed at the connection server "A1" (110) in order to route a return outbound message to edge server or endpoint device . In some implementations, the "EndPointId e1" is indexed to the connection handle associated with the persistent connection. The index may be or have been stored at the connection server "A1" (110) within a hash table. In turn, the message 506b is forwarded to the edge server "E1" (106) (step 506e) using the retrieved connection handle. To this end, preserving state information for a roundtrip routing through a multiplexed persistent connection paradigm may collectively employ a single hash-table (or the like) lookup of an identifier (e.g., end point identifier) associated with a given persistent connection, a single write function to inject the endpoint identifier into a message header, and a single read of the message header to retrieve the connection handle of the persistent connection over which to route the message.

In some implementations, the connection server "A1" (110) and/or edge server "E1" (106) sends a message to the endpoint device "D1" (104) to acknowledge a successful registration process (step 506f).

Referring still to FIG. 5, in some implementations, a message includes a binding request. In some implementations, a binding process (e.g., processing a binding request) is performed subsequent to an authentication process. The binding process binds a path, across one or more networks and systems (e.g., servers), between the endpoint device "D1" (104) and the platform server "P1" (102), preferably to allow for transmission of outbound messages/requests from the platform server 102 to the edge server and/or endpoint device. At each node (e.g., server) along the path, the binding process associates a connection handle of each persistent connection leading to the end-point device.

The binding process is synergistic with the usage of connection metadata, in which routing metadata, like connection metadata, allows for messages from the platform server to be quickly, accurately, and efficiently returned to the end-point device. However, rather than the information being located within the message, the binding process results in the information being maintained at the respective servers in the federation (e.g., the connection server and edge server).

Referring still to FIG. 5, in some implementations, the edge server "E1" (106) prepares a binding request message (step 508a) and sends the message 508b (step 508c) to the connection server "A1" (110) across the first persistent connection. The edge server "E1" (106) generates a "RequestId R2." In some implementations, the binding request message 508b includes a "BIND" request code, as described in relation to FIG. 4 and shown as "B" in message 508b. The binding request message 508b may include, in the payload, the name identifier of the endpoint device "D1" (104), illustrated as "<name>" in FIG. 5. In some implementation, the edge server "E1" maintains a list of endpoint devices that have bound to it. In some example implementations, the EndPoint device "D1" prepares the binding request message and sends it to the connection server "A1" (110) across the first persistent connection.

Upon receiving the binding request message 508b, in some implementations, the connection server "A1" (110) compares the name of the endpoint device to the list of authenticated sessions and, upon a match, injects (step 508d) "SessionId S1" (shown in FIG. 5 as "s1") and "EndpointId e1" (shown as "e1") into the received message 508b to produce message 508e.

The connection server "A1" (110) determines that the received message is a binding request. To this end, the connection server "A1" (110) adds the name identifier located within the binding request message to its binding registry. In the binding registry, the name identifier may be associated with a connection handle of the first persistent connection, an EndPoint ID and a Session ID. For example, the name identifier is used as an index value in a hash table (or the like) having the connection handle. Table 2 below illustrates and exemplary binding registry in a server (e.g., connection server "A1" (110)).

**TABLE 2**

| CONNECTION SERVER BINDING REGISTRY | | | |
|---|---|---|---|
| DEVICE NAME IDENTIFIER | CONNECTION HANDLE | ENDPOINT IDENTIFIER | SESSION IDENTIFIER |
| Hospital_VendMach | Persist_ConnectA1 | epID1 | sessID1 |
| John_Smith_Tablet_1 | Persist_ConnectB1 | epID2 | sessID2 |
| JohnDMedInt_EKG_Dev_123 | Persist_ConnectC1 | epID3 | sessID3 |
| Store_POSDev | Persist_ConnectA1 | epID1 | sessID1 |

The connection server "A1" (110), in turn, sends (step 508f) the binding request message 508e to the platform server "P1" (102), over a second persistent connection. It should be understood that, in some example implementations, multiple devices (e.g., "Hospital_VendMach" and "Store_POSDev") may be associated with the same persistent connection (e.g., "Persist_ConnectA1"), such as a connection between an edge server "E1" and the connection server "A1." In some example implementations, the EndPoint ID (e.g., "epID1") and Session ID ("sessID1") may be associated with the same persistent connection.

Upon receiving the binding request message 508e, in some implementations, the platform server "P1" (102) processes the binding request (step 510a). For example, it may add the name identifier to its binding registry, in association with the connection handle of the second persistent connection. In some example implementations, the platform server may also store the EndPoint ID associated with the device name. Table 3 below illustrates and exemplary binding registry in a server (e.g., platform server "P1" (102)).

**TABLE 3**

| PLATFORM SERVER BINDING REGISTRY | |
|---|---|
| DEVICE NAME IDENTIFIER | CONNECTION HANDLE |
| Hospital_VendMach | Persist_ConnectA2 |
| John_Smith_Tablet_1 | Persist_ConnectB2 |
| JohnDMedInt_EKG_Dev_123 | Persist_ConnectC2 |
| Store_POSDev | Persist_ConnectD2 |

In some implementations, the platform server "P1" (102) prepares a success message 512b (step 512a). The platform server "P1" (102) sends the success message 512b (step 512c) to the connection server "A1" (110) over the second persistent connection, which may be determined based on the connection handle retrieved using the name identifier and/or EndPointID. Upon receiving the message 512b, the connection server "A1" (110) may use the "EndPointId e1" to identify the persistent connection associated with the corresponding connection handle. The connection server "A1" (110) forwards the message 512e (step 512f) to the edge server "E1" (106) and/or the endpoint device "D1" over the persistent connection (e.g., the first persistent connection) identified using its binding registry.

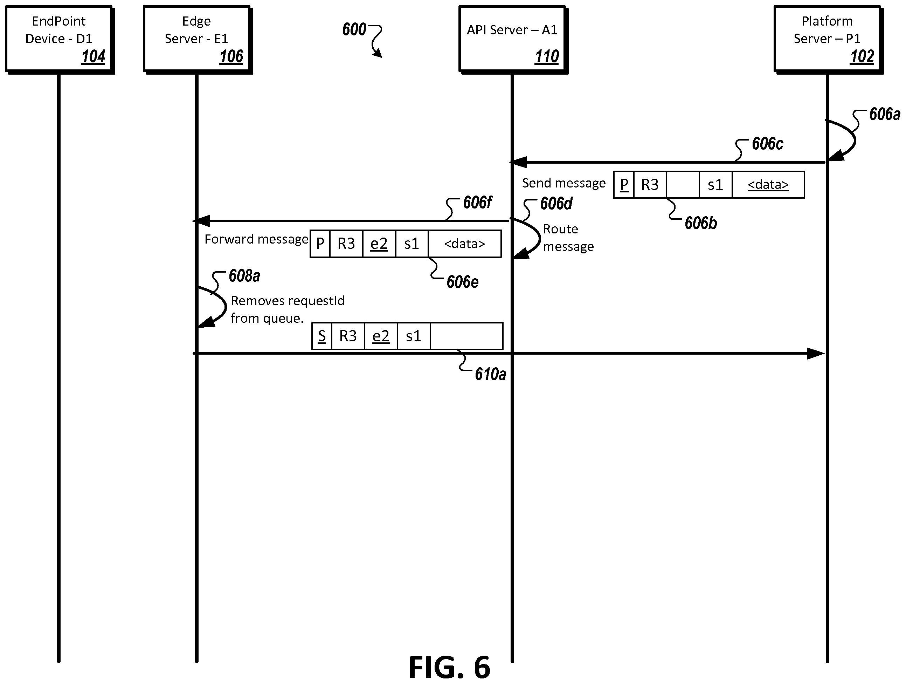

FIG. 6 is a swim-lane diagram of a method 600 of communicating from the platform server 102 over a stateless persistent connection in accordance with an embodiment of the invention.

The method 600, in some implementations, begins with the platform server "P1" (102) preparing a request message 606b (step 606a) for the edge server "E1" (106) and or endpoint device "D1", in accordance with the message structure of FIG. 3.

The platform server "P1" (102) sends the request message 606b to the connection server "A1" (110) over the second persistent connection using a connection handle determined from its binding registry.

Upon receiving the message 606b, in some implementations, the connection server "A1" (110) determines that the message is an outbound message from the platform server "P1" (102). This determination may be based on the connection handle of the second persistent connection, or it may be based on the presence of an endpoint ID or session identification number 308 within the message 606b. The connection server "A1" (110) may inject an "EndpointId e2" associated with the received connection handle for the second persistent connection (step 606d). The connection server "A1" (110) may identify the appropriate persistent connection for the message 606b using the name identifier (e.g., of the edge server "E1 or the endpoint device "D1") in the message 606b and a corresponding connection handle stored in its binding registry. The connection server "D1" (110) then forwards the message 606e to the appropriate edge server "E1" (106) and/or endpoint device "D1" using the identified connection handle (step 606f).

After receiving the message 606e, the edge server "E1" (106) and/or endpoint device "D1" (110) uses the requested data in the message's payload 304 (step 608a) and removes the data service request from its queue. The edge server "E1" (106) and/or endpoint device "D1" (110) may generate a success/acknowledgement message 610a (step 608a) and sends the success/acknowledgment message 610a to the connection server "A1" across the first persistent connection.

The connection server "A1" (110) receives the message 610a and relays the message to the platform server "P1" (102) over the second persistent connection using the "endPointId e2." Upon receiving the acknowledgment message 610a, in some implementations, the platform server "P1" (102) removes the request message from its queue.

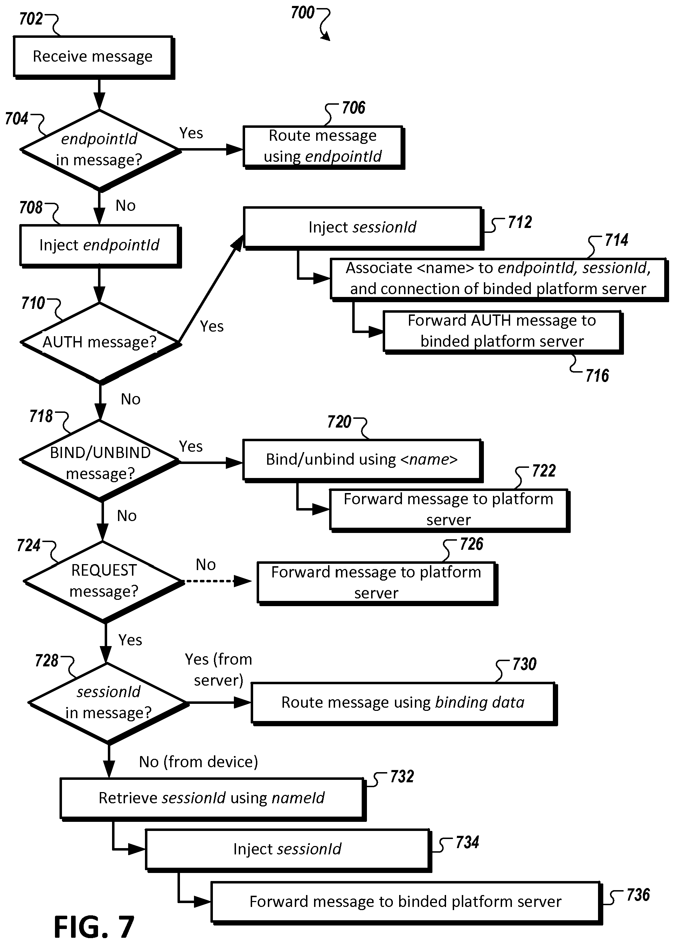

FIG. 7 is a flow chart for an example method 700 of controlling a connection server 110 in accordance with an embodiment of the invention. In some implementations, the controls are based on policies that are executed from a client-side application operating at the connection servers 110. A policy may include, for example, rule-base methodology, a state machine, a model-based control, and/or a sequential logic.

Upon receiving a message (step 702), the connection server 110 determines whether an endpoint identification number 310 is present in the message (step 704), as described in relation to FIGS. 5 and 6. In some implementations, the endpoint identification number 310 is located in a fixed field within the message header 302. In other implementations, the connection server 110 parses the message for the information (e.g., the endpoint identification number 310). If an endpointId 310 is identified in the message, then the connection server 102 may route the message using the endpointId 310, as described in relation to FIGS. 3, 5, and 6.

If the endpointId 310 is NULL or empty, the connection server 110 may inject an endpoint identification number associated with a connection handle associated with the channel over which the message was received.

The connection server 110 may, in turn, check the message method code 312 to determine the message type (step 710, 718, 724) (e.g., authentication message, bind/unbind message, request message).

If the message type is an authentication message (step 710), the connection server 110 may inject the session identification number 308 into the message (step 712), as described in relation to FIGS. 5 and 6. The connection server 110 may bind the endpointId 310, the sessionId 308 and the connection handle of the connection (step 714), as described in relation to FIG. 5, and forward the message to the platform server 102 (step 716).

If the message type is a bind or unbind message (step 718), the connection server 110 may bind the name identifier located in the message to its binding registry (or, in the case of an unbind message, dissociate or remove the name identifier in the message from its binding registry) (step 720) and forward the message to the platform server 102 (step 722).

If the message type is not a request type message (step 724), the connection server 110 may forward the message to the platform server 102 (step 726).

If the message type is a request type message, the connection server 110 may check the request message to determine whether the SessionId is present (step 728). If present, the connection server 100 may route the message to the respective edge server 106 using its binding registry, to determine the appropriate connection handle. If not present, the connection server 110 may retrieve the SessionId using the nameId in the message (step 732), inject the SessionId into the message (step 734), and forward the request message to the platform server (step 736).

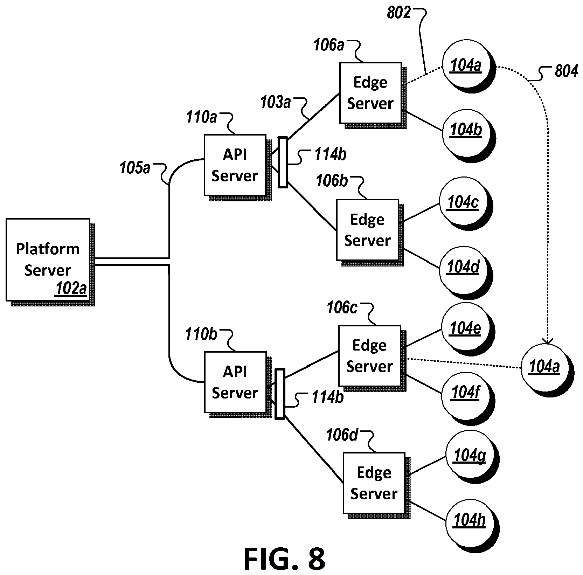

FIG. 8 illustrates a method of binding and rebinding in accordance with an embodiment of the invention. Binding allows a given computing device 104 to be serviced by the federation (e.g., set of networks and/or systems) while being connected to any end-point device within the federation without any knowledge of the device's own location or any networking or routing details about nodes within the federation. To this end, the federation allows messages from the computing device to freely route to the platform server regardless of the intermediate servers in the persistent-connection architecture.

The method initiates with a given computing device 104, namely the end-point device 104a, being registered, as described in relation to FIG. 5, with edge server 106a. The edge server 106a sends a bind request to a connection server 110a over persistent connection 103a. The bind request may include a name identifier of the end-point device 104 in the binding list. In some example implementations, the computing device 104 transmit the bind request to the connection server 110a, rather than to an edge server 106a to relay to the connection server 110a. The connection server 110a forwards the bind request 802 to the platform server over persistent connection 105a. The connection server 110a associates the end-point device 104a with the persistent connection 103a, and stores the association in its binding registry. The association may be based on the connection handle of the persistent connection. The binding registry may be a data table or a hash table. The platform server 102a associates the end-point device 104a with persistent connection 105a and stores the association in its binding registry. To this end, when sending a request message to end-point device 104a, the platform server 102a retrieves the persistent connection 105a associated with the end-point device 104a.

In the event that an end-point device 104a is bound to a connection server 110a via an edge server 106 (e.g., 106a), if the end-point device 104a moves to another edge server, namely edge server 106c, the end-point device 104a de-registers with the edge server 106a. That is, the edge server 106a sends an unbind request to the primary server 102a through the bounded path (103a, 105a). The unbind request removes the end-point device 104a from the binding registry of the connection server 110a and the platform server 102a. The end-point device 104a registers with the edge-server 106c and repeats the same binding process.

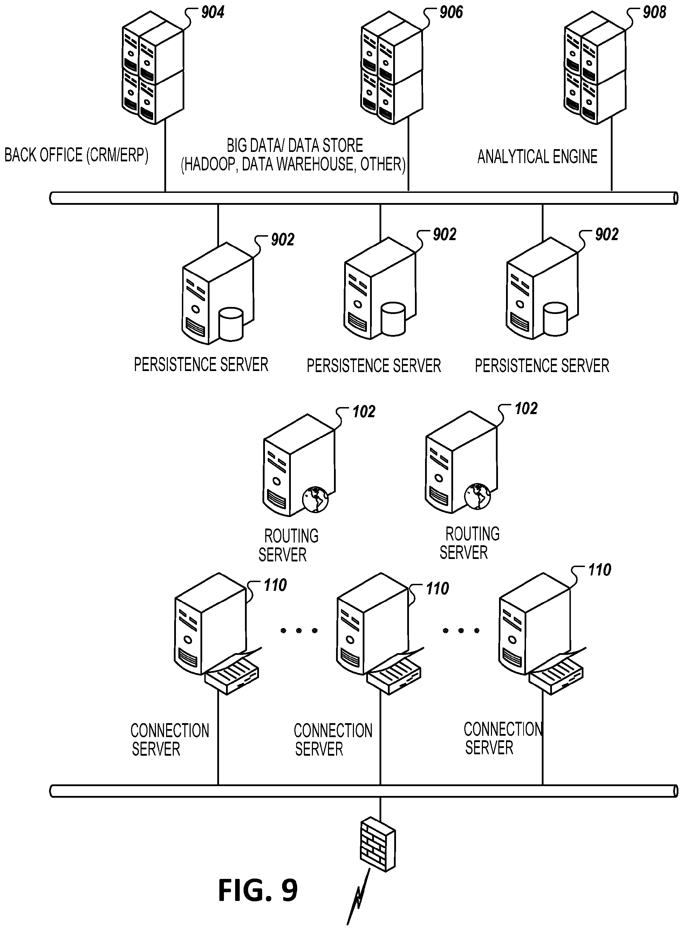

FIG. 9 is a block diagram of a network 900 using the system 100 in accordance with an embodiment of the invention. The network 900 may include back-end office components, as described in FIG. 2.

In some implementations, the network 900 includes one or more persistent servers 902. The persistence servers can share the load from data being sent to the platform server 102, shown as routing servers 102. The persistence servers 902 may employ specific types of persistence objects, such as Streams and DataTable.

In some implementations, the network 900 may include one or more back-office servers 904, such as CRM/ERP, and the like, as described in relation to FIG. 2.

In some implementations, the network 900 may include one or more Big Data and Data Store 906. Such servers 906 may communicate to the platform server 102 using Web protocols, such as Java Database Connectivity (JDBC) or native APIs. In some implementations, the platform server 102 may process an event to route the data to the appropriate database when data is received from a given computing device 104. Alternatively, a third party application may initiate an event.

FIG. 10 is a flowchart of an example method 1000 of injecting the state and routing information into a communication exchange between a platform server 102 and an end-point device 104 over a stateless persistent connection in accordance with an embodiment of the invention. An example of a stateless persistent connection is a WebSocket connection. The end-point device may be the edge server 106 or the computing device 104. The method 1000 may include providing one or more platform servers 102 connected to one or more intermediate servers 110. Each of the intermediate servers 110 may connect and maintain a persistent connection 200a to the platform server 102. The intermediate servers 110 may also communicate and maintain a number of unique persistent connections 200b with a plurality of edge servers.

In some implementations, a port at a given intermediate server 110 receives a service request from a given edge server 106 over a first persistent connection 200b (step 1002). The processor, at the intermediate server 110, inserts a routing state identifier to the service request (step 1004). The routing state identifier is associated with a connection identity of the first persistent connection. The intermediate server 110 is preferably "stateless" in that it does not retain state information associated with a given request message. In such implementations, the intermediate server 110 preferably does not maintain knowledge of whether a similar request message has been previously sent, which of a sequence of message actions the message belongs to, and the origin of the message. Put another way, it forgets (e.g., does not store) a given message after having forwarded along a received message.

Such a stateless paradigm may reduce the workload of the intermediate server 110 as it can, thus, be configured to operate with a fewer set of instructions and with lower memory usage requirements. To this end, with fewer resources being required for a given connection, a given intermediate server 110 can service more numbers of computing devices 104 as compared to a other hardware systems that operate additional overhead work of maintaining such state information. In some implementations, the given routing state identifier is injected into a header portion, such as the header 402, of each request message.

The intermediate server may maintain, in its memory, a second state identifier associated with an authentication session of a computing device 104. The second state identifier may be associated with a name value associated with the computing device 104. In some implementations, the intermediate server 110 may maintain the association in a hash table, or the like. The table may use name values to index the second state identifier (e.g., session identification number) and a name (e.g., device name / non-addressable identifier) of the endpoint device.

In some implementations, the second state identifier is also associated with the connection identity of the first persistent connection. The association may be stored in the local memory of the intermediate server 110.

In some implementations, the name value is preferably a non-addressable identifier or non-network-based addressable identifier. Rather than a network addressable identifiers, which can be for example a uniform resource identifier (URI) or an Internet Protocol (IP) address, the name value can be a non-addressable identifier such as a number sequence or a character string unrelated to a network address.

In some implementations, the intermediate server 110 transmits the service request to the platform server 102 over a second persistent connection (step 1006).

In some implementations, the intermediate server 110 receives a response message over the second persistent connection 200a. The response message may have been generated by the platform server in response to the service request and may include the session identifier (step 1008).

In some implementations, the intermediate server 110 retrieves the connection identity of the first persistent connection using the session identifier (step 1010). The session identifier is the same session identifier transmitted within the service request.

In some implementations, the intermediate server 110 routes the response message to a selected connection among the numbers of persistent connections established with the edge servers (step 1012) and/or computing devices. The selected connection may be based on the retrieved connection identity.

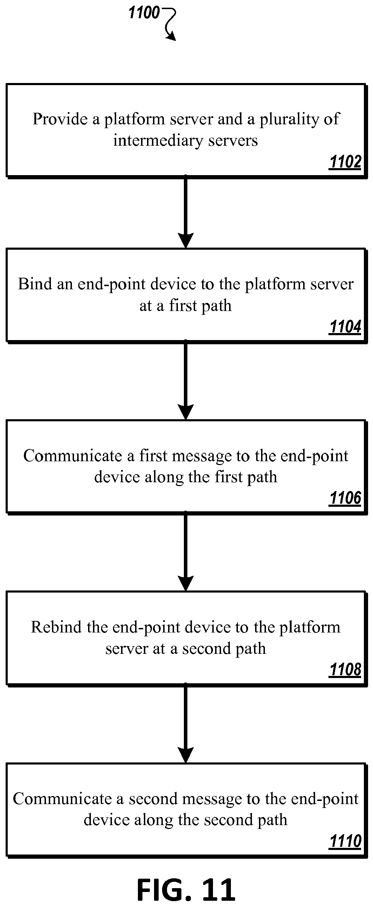

FIG. 11 is a flowchart of an example method 1100 of communication between two network nodes and an intermediary node over a persistent connection in accordance with an embodiment of the invention. In some implementations, the method 1100 begins at an initialized state at step 1102, where the two network nodes may include the platform server 102 and an end-point device (e.g., computing device 104. The method 1100 may include providing one or more platform servers 102 connected to one or more intermediate servers 110. Each of the intermediate servers 110 may connect and maintain a persistent connection 200a to the platform server 102. The intermediate servers 102 may communicate and maintain a number of unique persistent connections 200b with a plurality of edge servers 106 and/or computing (e.g. endpoint) devices 104.

In some implementations, the platform server 102 binds, at a first time instance, the end-point device 104 to the platform server 102 (step 1104). The binding, at the first instance, may associate with a first path across the network. The first path may be defined between the end-point device 104 and the platform server 102 across one or more intermediate servers and, in some example implementations, across one or more edge servers.

In some implementations, the platform server 102 communicates a first message to the end-point device 104 along the first path (step 1106).

In some implementations, the platform server 102 rebinds, at a second instance, the end-point device 104 to the platform server 102 (step 1108). This may occur after the end-point device 104 has outside of the first path (e.g., by binding with an edge server located across a path other than the first path).

In some implementations, the platform server 102 communicates a second message to the end-point device along the second path (step 1110). To this end, the end-point device can move among different geographic locations without knowledge of its own location. Rather, the network may discover a path for messages to flow to and from the platform server without any knowledge or location information on the part of the end-point device 104.

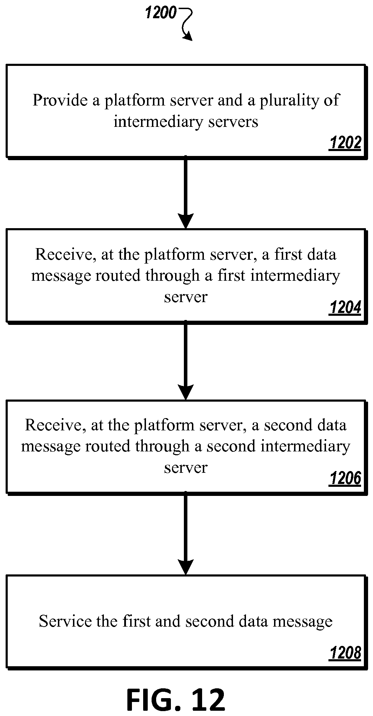

FIG. 12 is a flow chart of an example method 1200 of communication between the platform server and a plurality of end-point devices (e.g., end-point device 104) in accordance with an embodiment of the invention. In some implementations, the method 1200 begins at an initialized state (step 1202). In some implementations, the platform server 102 receives a first data message from a first end-point device 104a. The first data message is sent from the first end-point device 104a, via a first persistent connection 105a (step 1204), to a first intermediate server 110a, and, via a second persistent connection 103a, to the platform server 102.

In some implementations, the platform server 102 receives a second data message from a second end-point device 104b. The second data message is sent from the second end-point device 104b, via a third persistent connection 105b (step 1206), to a second intermediate server 110b, and, via a fourth persistent connection 103b, to the platform server 102.

Each of the first intermediate server 110a and second intermediate server 110b may manage both the authentication sessions and the connectivity between the end-point devices 104 and the platform servers 102.

In some implementations, the platform server 102 services the first data message and the second data message (step 1208). The platform server 102 may service the first data message and the second data message by routing the messages to a back-office server. As described in relation to FIG. 2, the back-office server may include, for example, a persistence server, a database server, a customer relationship management (CRM) server, an enterprise resource planning (ERP) server, an operation support system (OSS) server, a business support system (BSS) server, a data warehouse or the like.

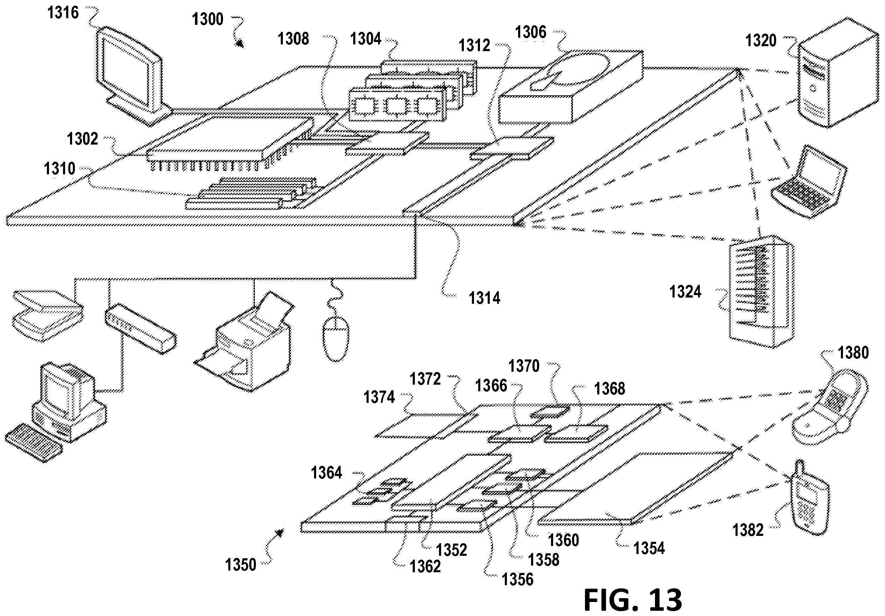

FIG. 13 shows an example of a computing device 1300 and a mobile computing device 1350 that can be used to implement the techniques described in this disclosure. The computing device 1300 is intended to represent various forms of digital computers, such as laptops, desktops, workstations, personal digital assistants, servers, blade servers, mainframes, and other appropriate computers. The mobile computing device 1350 is intended to represent various forms of mobile devices, such as personal digital assistants, cellular telephones, smart-phones, and other similar computing devices. The components shown here, their connections and relationships, and their functions, are meant to be examples only, and are not meant to be limiting.

The computing device 1300 may include a processor 1302, a memory 1304, a storage device 1306, a high-speed interface 1308 connecting to the memory 1304 and multiple high-speed expansion ports 1310, and a low-speed interface 1312 connecting to a low-speed expansion port 1314 and the storage device 1306. Each of the processor 1302, the memory 1304, the storage device 1306, the high-speed interface 1308, the high-speed expansion ports 1310, and the low-speed interface 1312, are interconnected using various busses, and may be mounted on a common motherboard or in other manners as appropriate. The processor 1302 can process instructions for execution within the computing device 1300, including instructions stored in the memory 1304 or on the storage device 1306 to display graphical information for a GUI on an external input/output device, such as a display 1316 coupled to the high-speed interface 1308. In other implementations, multiple processors and/or multiple buses may be used, as appropriate, along with multiple memories and types of memory. Also, multiple computing devices may be connected, with each device providing portions of the necessary operations (e.g., as a server bank, a group of blade servers, or a multi-processor system).

The memory 1304 stores information within the computing device 1300. In some implementations, the memory 1304 is a volatile memory unit or units. In some implementations, the memory 1304 is a non-volatile memory unit or units. The memory 1304 may also be another form of computer-readable medium, such as a magnetic or optical disk.

The storage device 1306 is capable of providing mass storage for the computing device 1300. In some implementations, the storage device 1306 may be or contain a computer-readable medium, such as a floppy disk device, a hard disk device, an optical disk device, or a tape device, a flash memory or various solid state memory device, or an array of devices, including devices in a storage area network or various configurations. Instructions can be stored in an information carrier. The instructions, when executed by one or more processing devices (for example, processor 1302), perform one or more methods, such as those described above. The instructions can also be stored by one or more storage devices such as computer- or machine-readable mediums (for example, the memory 1304, the storage device 1306, or memory on the processor 1302).

The high-speed interface 1308 manages bandwidth-intensive operations for the computing device 1300, while the low-speed interface 1312 manages lower bandwidth-intensive operations. Such allocation of functions is an example only. In some implementations, the high-speed interface 1308 is coupled to the memory 1304, the display 1316 (e.g., through a graphics processor or accelerator), and to the high-speed expansion ports 1310, which may accept various expansion cards (not shown). In the implementations, the low-speed interface 1312 is coupled to the storage device 1306 and the low-speed expansion port 1314. The low-speed expansion port 1314, which may include various communication ports (e.g., USB, Bluetooth®, Ethernet, wireless Ethernet) may be coupled to one or more input/output devices, such as a keyboard, a pointing device, a scanner, or a networking device such as a switch or router, e.g., through a network adapter.

The computing device 1300 may be implemented in a number of different forms, as shown in the figure. For example, it may be implemented as a standard server 1320, or multiple times in a group of such servers. In addition, it may be implemented in a personal computer such as a laptop computer 1322. It may also be implemented as part of a rack server system 1324. Alternatively, components from the computing device 1300 may be combined with other components in a mobile device (not shown), such as a mobile computing device 1350. Each of such devices may contain one or more of the computing device 1300 and the mobile computing device 1350, and an entire system may be made up of multiple computing devices communicating with each other.

The mobile computing device 1350 may include a processor 1352, a memory 1364, an input/output device such as a display 1354, a communication interface 1366, and a transceiver 1368, among other components. The mobile computing device 1350 may also be provided with a storage device, such as a micro-drive or other device, to provide additional storage. Each of the processor 1352, the memory 1364, the display 1354, the communication interface 1366, and the transceiver 1368, are interconnected using various buses, and several of the components may be mounted on a common motherboard or in other manners as appropriate.

The processor 1352 can execute instructions within the mobile computing device 1350, including instructions stored in the memory 1364. The processor 1352 may be implemented as a chipset of chips that include separate and multiple analog and digital processors. The processor 1352 may provide, for example, for coordination of the other components of the mobile computing device 1350, such as control of user interfaces, applications run by the mobile computing device 1350, and wireless communication by the mobile computing device 1350.

The processor 1352 may communicate with a user through a control interface 1358 and a display interface 1356 coupled to the display 1354. The display 1354 may be, for example, a TFT (Thin-Film-Transistor Liquid Crystal Display) display or an OLED (Organic Light Emitting Diode) display, or other appropriate display technology. The display interface 1356 may comprise appropriate circuitry for driving the display 1354 to present graphical and other information to a user. The control interface 1358 may receive commands from a user and convert them for submission to the processor 1352. In addition, an external interface 1362 may provide communication with the processor 1352, so as to enable near area communication of the mobile computing device 1350 with other devices. The external interface 1362 may provide, for example, for wired communication in some implementations, or for wireless communication in other implementations, and multiple interfaces may also be used.

The memory 1364 stores information within the mobile computing device 1350. The memory 1364 can be implemented as one or more of a computer-readable medium or media, a volatile memory unit or units, or a non-volatile memory unit or units. An expansion memory 1374 may also be provided and connected to the mobile computing device 1350 through an expansion interface 1372, which may include, for example, a SIMM (Single In Line Memory Module) card interface. The expansion memory 1374 may provide extra storage space for the mobile computing device 1350, or may also store applications or other information for the mobile computing device 1350. Specifically, the expansion memory 1374 may include instructions to carry out or supplement the processes described above, and may include secure information also. Thus, for example, the expansion memory 1374 may be provide as a security module for the mobile computing device 1350, and may be programmed with instructions that permit secure use of the mobile computing device 1350. In addition, secure applications may be provided via the SIMM cards, along with additional information, such as placing identifying information on the SIMM card in a non-hackable manner.

The memory may include, for example, flash memory and/or NVRAM memory (non-volatile random access memory), as discussed below. In some implementations, instructions are stored in an information carrier, that the instructions, when executed by one or more processing devices (for example, processor 1352), perform one or more methods, such as those described above. The instructions can also be stored by one or more storage devices, such as one or more computer- or machine-readable mediums (for example, the memory 1364, the expansion memory 1374, or memory on the processor 1352). In some implementations, the instructions can be received in a propagated signal, for example, over the transceiver 1368 or the external interface 1362.

The mobile computing device 1350 may communicate wirelessly through the communication interface 1366, which may include digital signal processing circuitry where necessary. The communication interface 1366 may provide for communications under various modes or protocols, such as GSM voice calls (Global System for Mobile communications), SMS (Short Message Service), EMS (Enhanced Messaging Service), or MMS messaging (Multimedia Messaging Service), CDMA (code division multiple access), TDMA (time division multiple access), PDC (Personal Digital Cellular), WCDMA (Wideband Code Division Multiple Access), CDMA2000, or GPRS (General Packet Radio Service), among others. Such communication may occur, for example, through the transceiver 1368 using a radio-frequency. In addition, short-range communication may occur, such as using a Bluetooth®, Wi-Fi™, or other such transceiver (not shown). In addition, a GPS (Global Positioning System) receiver module 1370 may provide additional navigation- and location-related wireless data to the mobile computing device 1350, which may be used as appropriate by applications running on the mobile computing device 1350.

The mobile computing device 1350 may also communicate audibly using an audio codec 1360, which may receive spoken information from a user and convert it to usable digital information. The audio codec 1360 may likewise generate audible sound for a user, such as through a speaker, e.g., in a handset of the mobile computing device 1350. Such sound may include sound from voice telephone calls, may include recorded sound (e.g., voice messages, music files, etc.) and may also include sound generated by applications operating on the mobile computing device 1350.

The mobile computing device 1350 may be implemented in a number of different forms, as shown in the figure. For example, it may be implemented as a cellular telephone 1380. It may also be implemented as part of a smart-phone 1382, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementations in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms machine-readable medium and computer-readable medium refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term machine-readable signal refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing system that may include a back end component (e.g., as a data server), or that may include a middleware component (e.g., an application server), or that may include a front end component (e.g., a client computer having a graphical user interface or a Web browser through which a user can interact with an implementations of the systems and techniques described here), or any combination of such back end, middleware, or front end components. The components of the system can be interconnected by any form or medium of digital data communication (e.g., a communication network). Examples of communication networks include a local area network (LAN), a wide area network (WAN), and the Internet.

The computing system can include clients and servers. A client and server are generally remote from each other and typically interact through a communication network. The relationship of client and server arises by virtue of computer programs running on the respective computers and having a client-server relationship to each other.

In view of the structure, functions and apparatus of the systems and methods described here, in some implementations, a system and method for injecting state and routing information into a communication exchange between a platform server and an end-point device over a stateless persistent connection are provided. Having described certain implementations of methods and apparatus for supporting injection of the state and routing information into the communication exchange, it will now become apparent to one of skill in the art that other implementations incorporating the concepts of the disclosure may be used.

Moreover, in view of the structure, functions and apparatus of the systems and methods described here, in some implementations, a system and method for communication over a set of persistent connections between two network nodes and an intermediary node are provided. Having described certain implementations of methods and apparatus for supporting communication over the persistent connection, it will now become apparent to one of skill in the art that other implementations incorporating the concepts of the disclosure may be used.

Moreover, in view of the structure, functions and apparatus of the systems and methods described here, in some implementations, a system and method for communication over a set of persistent connections between two network nodes and an intermediary node are provided. Having described certain implementations of methods and apparatus for supporting communication over the persistent connection, it will now become apparent to one of skill in the art that other implementations incorporating the concepts of the disclosure may be used.

Therefore, the disclosure should not be limited to certain implementations, but rather should be limited only by the scope of the following claims.

## Claims

1. A method for injecting states into data streams, said method performed by each one of a plurality of intermediate servers (110), the method comprising:
communicatively coupling the respective intermediate server to a network and to a platform server (102), the network including the platform server (102) connected thereto,
wherein the platform server (102) is communicatively coupled to the plurality of intermediate servers (110) over corresponding persistent connections (105, 200a), wherein the persistent connections (105, 200a) are WebSocket connections;
wherein the plurality of intermediate servers (110) are communicatively coupled to a plurality of computing devices (104, 108, 118a, 118b) over corresponding persistent connections,
wherein the persistent connections are WebSocket connections;
receiving (1002), via a port, over a first persistent connection (200b), a service request (300) from one of the plurality of computing devices (104, 108, 118a, 118b);
inserting (1004) a state identifier (310) into the service request (300), the state identifier (310) being associated with a connection identity of the first persistent connection (200b),
wherein the association between the state identifier and the connection identity is stored at the respective intermediate server (110),
wherein the state identifier (310) is an endpoint identifier corresponding to the one of the plurality of computing devices (104, 108, 118a, 118b),
wherein the connection identity is a WebSocket handle;
transmitting (1006) the service request (300) to the platform server (102) over a second persistent connection (105,200a);
receiving (1008) a response message over the second persistent connection (105,200a),
wherein the response message is generated by the platform server (102) in response to the service request (300), and
wherein the response message includes a state identifier (310) of the response message;
retrieving (1010) the connection identity of the first persistent connection (200b) using the state identifier (310), the state identifier (310) of the response message being the same state identifier (310) included in the service request (300); and
transmitting (1012), over the first persistent connection (200b), the response message to the one of the plurality of computing devices (104, 108, 118a, 118b), the first persistent connection (200b) being selected based on the retrieved connection identity.

2. The method of claim 1, further comprising:
storing, in a memory, a second state identifier (308) associated with an authentication exchange between the one of the plurality of computing devices (104) and the platform server (102), the second state identifier (308) being associated with a name value of the one of the plurality of computing devices (104);
comparing a device identifier included in the service request (300) to name values of the plurality of computing devices (104, 108, 118a, 118b), the device identifier being associated with the one of the plurality of computing devices (104, 108, 118a, 118b); and
injecting the second state identifier (308) into the service request (300), if the device identifier included in the service request (300) is matched with a name value of the plurality of computing devices (104, 108, 118a, 118b).

3. The method of claim 2, further comprising:
in the event that the device identifier included in the service request (300) is not matched with a name value of the plurality of computing devices (104, 108, 118a, 118b), causing by an intermediate server (110) to remove the device identifier from a binding list including one or more device identifiers.

4. The method of claim 2 or 3, further comprising:
associating the second state identifier (308) with the connection identity of the first persistent connection (200b); and
storing, in the memory, the association of the second state identifier (308) with the connection identity of the first persistent connection (200b).

5. The method of any one of claims 1-4, wherein state information is associated with message content embedded within the response message such that an intermediate server (110) is stateless.

6. The method of any one of claims 1-5, wherein the state identifier (310) is inserted into a header portion of the service request (300).

7. The method of claim 3, wherein the binding list comprises a binding list of an intermediate server (110).

8. The method of any one of claims 1-5, wherein the service request includes a header portion (302).

9. The method of claim 8, wherein the header portion (302) includes a request identification number (306) that is associated with the service request and used to identify the service request.

10. The method of claim 9, wherein the header portion (302) includes a multipart message field (314), wherein the multipart message field identifies whether the service request is part of a group of messages having the same request identification number (306).

11. The method of claim 3, wherein the binding list comprises a binding list of an edge server.

12. The method of any one of claims 1-10, wherein the network further comprises a plurality of edge servers, wherein the edge servers communicate with the intermediate servers over corresponding persistent connections.

13. The method of any one of claims 2 to 8, wherein the state identifier (310) is a 32-digit long binary number with the most significant digit first.

14. A system, the system being an intermediate server (110), comprising:
a processor; and
a memory having instructions stored thereon, wherein the instructions, when executed by the processor, cause the processor to perform the method of any of claims 1-10.

15. A non-transitory computer readable medium having instruction stored thereon, wherein the instructions, when executed by the system of claim 14, cause the system to perform the method of any of claims 1-10.

## Patentansprüche

1. Ein Verfahren zum Einspeisen von Zuständen in Datenströme, wobei das genannte Verfahren von jedem Einzelnen aus einer Vielzahl von Zwischenservern (110) durchgeführt wird, wobei das Verfahren Folgendes umfasst:
kommunikativ Koppeln des jeweiligen Zwischenservers mit einem Netzwerk und einem Plattformserver (102), wobei das Netzwerk den damit verbundenen Plattformserver (102) beinhaltet,
wobei der Plattformserver (102) über entsprechende persistente Verbindungen (105, 200a) kommunikativ mit der Vielzahl von Zwischenservern (110) gekoppelt ist, wobei die persistenten Verbindungen (105, 200a) *WebSocket*-Verbindungen sind;
wobei die Vielzahl von Zwischenservern (110) über entsprechende persistente Verbindungen kommunikativ mit einer Vielzahl von Rechenvorrichtungen (104, 108, 118a, 118b) gekoppelt sind,
wobei die persistenten Verbindungen WebSocket-Verbindungen sind;
Empfangen (1002), über einen Port, über eine erste dauerhafte Verbindung (200b), einer Service-Anforderung (300) von einer aus der Vielzahl von Rechenvorrichtungen (104, 108, 118a, 118b);
Einfügen (1004) einer Zustandskennung (310) in die Service-Anforderung (300), wobei die Zustandskennung (310) einer Verbindungsidentität der ersten persistenten Verbindung (200b) zugeordnet ist,
wobei die Zuordnung zwischen der Zustandskennung und der Verbindungsidentität im jeweiligen Zwischenserver (110) gespeichert ist,
wobei die Zustandskennung (310) eine Endpunkt-Kennung ist, die der einen aus der Vielzahl von Rechenvorrichtungen (104, 108, 118a, 118b) entspricht,
wobei die Verbindungsidentität ein *WebSocket-Handle* ist;
Übertragen (1006) der *Service*-Anforderung (300) an den Plattformserver (102) über eine zweite dauerhafte Verbindung (105, 200a);
Empfangen (1008) einer Antwortnachricht über die zweite persistente Verbindung (105, 200a),
wobei die Antwortnachricht durch den Plattformserver (102) als Reaktion auf die *Service*-Anforderung (300) erzeugt wird, und
wobei die Antwortnachricht eine Zustandskennung (310) der Antwortnachricht beinhaltet;
Abrufen (1010) der Verbindungsidentität der ersten persistenten Verbindung (200b) unter Verwendung der Zustandskennung (310), wobei die Zustandskennung (310) der Antwortnachricht die gleiche Zustandskennung (310) ist, die in der *Service-*Anforderung (300) enthalten ist; und
Übertragen (1012), über die erste persistente Verbindung (200b), der Antwortnachricht an die eine der Vielzahl von Rechenvorrichtungen (104, 108, 118a, 118b), wobei die erste persistente Verbindung (200b) basierend auf der abgerufenen Verbindungsidentität ausgewählt wird.

2. Das Verfahren nach Anspruch 1, das ferner Folgendes umfasst:
Speichern, in einem Speicher, einer zweiten Zustandskennung (308), die einem Authentifizierungsaustausch zwischen der einen der Vielzahl von Rechenvorrichtungen (104) und dem Plattformserver (102) zugeordnet ist, wobei die zweite Zustandskennung (308) einem Namenswert der einen der Vielzahl von Rechenvorrichtungen (104) zugeordnet ist;
Vergleichen einer in der *Service*-Anforderung (300) enthaltenen Vorrichtungskennung mit Namenswerten der Vielzahl von Rechenvorrichtungen (104, 108, 118a, 118b), wobei die Vorrichtungskennung dem einen aus der Vielzahl von Rechenvorrichtungen (104, 108, 118a, 118b) zugeordnet ist; und
Einspritzen der zweiten Zustandskennung (308) in die *Service*-Anforderung (300), falls die in der Service-Anforderung (300) enthaltene Vorrichtungskennung mit einem Namenswert der Vielzahl von Rechenvorrichtungen (104, 108, 118a, 118b) übereinstimmt.

3. Das Verfahren nach Anspruch 2, das ferner Folgendes umfasst:
für den Fall, dass die in der *Service*-Anforderung (300) enthaltene Vorrichtungskennung nicht mit einem Namenswert der Vielzahl von Rechenvorrichtungen (104, 108, 118a, 118b) übereinstimmt, Bewirken, durch einen Zwischenserver (110), dass die Vorrichtungskennung aus einer *Binding List* entfernt wird, die eine oder mehrere Vorrichtungskennungen beinhaltet.

4. Das Verfahren nach Anspruch 2 oder 3, das ferner Folgendes umfasst:
Zuordnen der zweiten Zustandskennung (308) zur Verbindungsidentität der ersten persistenten Verbindung (200b); und
Speichern, im Speicher, der Zuordnung der zweiten Zustandskennung (308) zur Verbindungsidentität der ersten persistenten Verbindung (200b).

5. Das Verfahren nach irgendeinem der Ansprüche 1 - 4, wobei Zustandsinformationen dem Nachrichteninhalt zugeordnet sind, der in die Antwortnachricht eingebettet ist, sodass ein Zwischenserver (110) zustandslos ist.

6. Das Verfahren nach irgendeinem der Ansprüche 1 - 5, wobei die Zustandskennung (310) in einen Kopfabschnitt der *Service*-Anforderung (300) eingefügt wird.

7. Das Verfahren nach Anspruch 3, wobei die *Binding List* eine *Binding List* eines Zwischenservers (110) umfasst.

8. Das Verfahren nach einem der Ansprüche 1 - 5, wobei die *Service-*Anforderung einen Kopfabschnitt (302) beinhaltet.

9. Das Verfahren nach Anspruch 8, wobei der Kopfabschnitt (302) eine Anforderungs-Identifikationsnummer (306) beinhaltet, die der *Service*-Anforderung zugeordnet ist und zum Identifizieren der Service-Anforderung verwendet wird.

10. Das Verfahren nach Anspruch 9, wobei der Kopfabschnitt (302) ein mehrteiliges Nachrichtenfeld (314) beinhaltet, wobei das mehrteilige Nachrichtenfeld identifiziert, ob die *Service*-Anforderung Teil einer Gruppe von Nachrichten mit der gleichen Anforderungsidentifikationsnummer (306) ist.

11. Das Verfahren nach Anspruch 3, wobei die *Binding List* eine *Binding List* eines Edge-Servers umfasst.

12. Das Verfahren nach einem der Ansprüche 1 - 10, wobei das Netzwerk ferner eine Vielzahl von Edge-Servern umfasst, wobei die Edge-Server über entsprechende persistente Verbindungen mit den Zwischenservern kommunizieren.

13. Das Verfahren nach einem der Ansprüche 2 bis 8, wobei die Zustandskennung (310) eine 32-stellige lange Binärzahl ist, mit der höchstwertigen Ziffer zuerst.

14. Ein System, wobei das System ein Zwischenserver (110) ist, das Folgendes umfasst:
einen Prozessor; und
einen Speicher mit darauf gespeicherten Anweisungen, wobei die Anweisungen, wenn sie vom Prozessor ausgeführt werden, den Prozessor dazu veranlassen, das Verfahren nach irgendeinem der Ansprüche 1 - 10 durchzuführen.

15. Ein nichtflüchtiges, computerlesbares Medium mit darauf gespeicherter Anweisungen, wobei die Anweisungen, wenn sie vom Prozessor ausgeführt werden, den Prozessor dazu veranlassen, das Verfahren nach irgendeinem der Ansprüche 1 - 10 durchzuführen.

## Revendications

1. Un procédé pour injecter des états dans des flux de données, ledit procédé étant exécuté par chacun d'une pluralité de serveurs intermédiaires (110), le procédé comprenant le fait de :
coupler de manière communicative le serveur intermédiaire respectif à un réseau et à un serveur de plate-forme (102), le réseau incluant le serveur de plate-forme (102) connecté à celui-ci,
sachant que le serveur de plate-forme (102) est couplé de manière communicative à la pluralité de serveurs intermédiaires (110) en passant par des connexions persistantes correspondantes (105, 200a), les connexions persistantes (105, 200a) étant des connexions WebSocket ;
sachant que la pluralité de serveurs intermédiaires (110) sont couplés de manière communicative à une pluralité de dispositifs informatiques (104, 108, 118a, 118b) en passant par des connexions persistantes correspondantes,
sachant que les connexions persistantes sont des connexions *WebSocket ;*
recevoir (1002), via un port, en passant par une première connexion persistante (200b), une demande de service (300) provenant de l'un de la pluralité de dispositifs informatiques (104, 108, 118a, 118b) ;
insérer (1004) un identificateur d'état (310) dans la demande de service (300), l'identificateur d'état (310) étant associé à une identité de connexion de la première connexion persistante (200b),
sachant que l'association entre l'identificateur d'état et l'identité de connexion est stockée au niveau du serveur intermédiaire respectif (110),
sachant que l'identificateur d'état (310) est un identificateur de point final correspondant à celui de la pluralité de dispositifs informatiques (104, 108, 118a, 118b),
sachant que l'identité de connexion est un descripteur (*handle*) de *WebSocket* ;
transmettre (1006) la demande de service (300) au serveur de plate-forme (102) via une deuxième connexion persistante (105, 200a) ;
recevoir (1008) un message de réponse sur la deuxième connexion persistante (105,200a),
sachant que le message de réponse est généré par le serveur de plate-forme (102) en réponse à la demande de service (300), et
sachant que le message de réponse comprend un identificateur d'état (310) du message de réponse ;
récupérer (1010) l'identité de connexion de la première connexion persistante (200b) en utilisant l'identificateur d'état (310), l'identificateur d'état (310) du message de réponse étant le même identificateur d'état (310) qui est inclus dans la demande de service (300) ; et
transmettre (1012), en passant par la première connexion persistante (200b), le message de réponse à l'un parmi la pluralité de dispositifs informatiques (104, 108, 118a, 118b), la première connexion persistante (200b) étant sélectionnée en fonction de l'identité de connexion récupérée.

2. Le procédé d'après la revendication 1, comprenant en outre le fait de :
stocker, dans une mémoire, un deuxième identificateur d'état (308) associé à un échange d'authentification entre l'un parmi la pluralité de dispositifs informatiques (104) et le serveur de plate-forme (102), le deuxième identificateur d'état (308) étant associé à une valeur de nom de l'un parmi la pluralité des dispositifs informatiques (104) ;
comparer un identificateur de dispositif, inclus dans la demande de service (300), à des valeurs de nom de la pluralité de dispositifs informatiques (104, 108, 118a, 118b), l'identificateur de dispositif étant associé audit parmi la pluralité de dispositifs informatiques (104, 108, 118a, 118b) ; et de
injecter le deuxième identificateur d'état (308) dans la demande de service (300), si l'identificateur de dispositif, inclus dans la demande de service (300), correspond à une valeur de nom de la pluralité des dispositifs informatiques (104, 108, 118a, 118b).

3. Le procédé d'après la revendication 2, comprenant en outre le fait de :
dans le cas où l'identificateur de dispositif inclus dans la demande de service (300) ne correspond pas à une valeur de nom de la pluralité de dispositifs informatiques (104, 108, 118a, 118b), faire en sorte qu'au moyen d'un serveur intermédiaire (110) l'identificateur de dispositif soit supprimé d'une liste de liaison (*binding list*) incluant un ou plusieurs identificateurs de dispositif.

4. Le procédé d'après la revendication 2 ou 3, comprenant en outre le fait de :
associer le deuxième identificateur d'état (308) à l'identité de connexion de la première connexion persistante (200b) ; et de
stocker en mémoire l'association du deuxième identificateur d'état (308) avec l'identité de connexion de la première connexion persistante (200b).

5. Le procédé d'après l'une quelconque des revendications de 1 à 4, sachant que des informations d'état sont associées à un contenu de message incorporé dans le message de réponse, de manière qu'un serveur intermédiaire (110) soit sans état.

6. Le procédé d'après l'une quelconque des revendications de 1 à 5, sachant que l'identificateur d'état (310) est inséré dans une partie d'en-tête de la demande de service (300).

7. Le procédé d'après la revendication 3, sachant que la liste de liaison comprend une liste de liaison d'un serveur intermédiaire (110).

8. Le procédé d'après l'une quelconque des revendications de 1 à 5, sachant que la demande de service inclut une partie d'en-tête (302).

9. Le procédé d'après la revendication 8, sachant que la partie d'en-tête (302) inclut un numéro d'identification de demande (306) qui est associé à la demande de service et utilisé pour identifier la demande de service.

10. Le procédé d'après la revendication 9, sachant que la partie d'en-tête (302) inclut un champ de message en plusieurs parties (314), sachant que le champ de message en plusieurs parties permet de déterminer si la demande de service fait partie d'un groupe de messages ayant le même numéro d'identification (306).

11. Le procédé d'après la revendication 3, sachant que la liste de liaison comprend une liste de liaison d'un serveur Edge.

12. Le procédé d'après l'une quelconque des revendications de 1 à 10, sachant que le réseau comprend en outre une pluralité de serveurs Edge, sachant que les serveurs Edge communiquent avec les serveurs intermédiaires par des connexions persistantes correspondantes.

13. Le procédé d'après l'une quelconque des revendications de 2 à 8, sachant que l'identificateur d'état (310) est un nombre binaire long de 32 chiffres avec le chiffre le plus significatif en premier.

14. Un système, le système étant un serveur intermédiaire (110), comprenant :
un processeur ; et
une mémoire ayant des instructions stockées sur celle-ci, sachant que les instructions, lorsqu'elles sont exécutées par le processeur, amènent le processeur à exécuter le procédé d'après l'une quelconque des revendications 1 - 10.

15. Un support non transitoire lisible par ordinateur sur lequel sont stockées des instructions, sachant que les instructions, lorsqu'elles sont exécutées par le système de la revendication 14, amènent le système à exécuter le procédé d'après l'une quelconque des revendications 1 - 10.
